(19) Europäisches Patentamt
European Patent Office
Office européen des brevets

(11) EP 2 525 518 B1

(12) **EUROPEAN PATENT SPECIFICATION**

(45) Date of publication and mention
of the grant of the patent:
**10.04.2019 Bulletin 2019/15**

(51) Int Cl.:
*H04J 99/00* (2009.01)          *H04B 7/04* (2017.01)
*H04J 11/00* (2006.01)          *H04B 7/0413* (2017.01)

(21) Application number: **11732954.0**

(22) Date of filing: **14.01.2011**

(86) International application number:
**PCT/JP2011/050541**

(87) International publication number:
**WO 2011/087084 (21.07.2011 Gazette 2011/29)**

(54) **COMMUNICATION SYSTEM, COMMUNICATION DEVICE, COMMUNICATION METHOD, AND PROCESSOR**

KOMMUNIKATIONSSYSTEM, KOMMUNIKATIONSVORRICHTUNG, KOMMUNIKATIONSVERFAHREN UND PROZESSOR

SYSTÈME, DISPOSITIF, PROCÉDÉ DE COMMUNICATION ET PROCESSEUR

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **15.01.2010 JP 2010007042**

(43) Date of publication of application:
**21.11.2012 Bulletin 2012/47**

(73) Proprietor: **Sharp Kabushiki Kaisha**
**Osaka 590-8522 (JP)**

(72) Inventors:
• NAKANO Hiroshi
  Osaka 590-8522 (JP)
• ONODERA, Takashi
  Osaka 590-8522 (JP)
• TO, Shimpei
  Osaka 590-8522 (JP)
• HIRATA, Kozue
  Osaka 590-8522 (JP)

(74) Representative: **Müller Hoffmann & Partner**
**Patentanwälte mbB**
**St.-Martin-Strasse 58**
**81541 München (DE)**

(56) References cited:
EP-A1- 1 782 554          WO-A2-2009/096345
JP-A- 2009 182 894        JP-A- 2009 290 449

• TSUGUHIDE AOKI ET AL: "Pilot design for precoding in Multiuser MIMO on IEEE802.16m downlink ; C80216m-08_205r2", IEEE DRAFT; C80216M-08_205R2, IEEE-SA, PISCATAWAY, NJ USA, vol. 802.16m, no. r2, 10 March 2008 (2008-03-10), pages 1-8, XP017791174, [retrieved on 2008-03-12]
• HARDJAWANA W ET AL: "Cooperative Multi-User MIMO Wireless Systems Employing Precoding and Beamforming", PROCEEDINGS OF THE IEEE GLOBAL TELECOMMUNICATIONS CONFERENCE, 2007,, 30 November 2009 (2009-11-30), pages 1-6, XP008153736, DOI: 10.1109/GLOCOM.2009.5426164
• WIBOWO HARDJAWANA ET AL.: 'Cooperative Multi- User MIMO Wireless Systems Employing Precoding and Beamforming' PROCEEDINGS OF THE IEEE GLOBAL TELECOMMUNICATIONS CONFERENCE, 2007. 30 November 2009, pages 1 - 6, XP008153736

**Description**

TECHNICAL FIELD

The present invention relates to a communication system, a communication device, a communication method, and a processor.
Priority is claimed on Japanese Patent Application No. 2010-007042, filed January 15, 2010

BACKGROUND ART

Recently, next generation mobile communication systems have been considered by 3GPP (The Third Generation Partnership Project) or the like. Regarding the 3.9 generation LTE (Long Term Evolution) system, MIMO (Multiple Input Multiple Output) technology of spatially multiplexing different data using multiple transmission and reception antennas has been specified in order to achieve high throughput efficiently using frequency bands in downlink. Further, standardization of the fourth generation LTE-Advanced is currently in progress. Regarding the LTE-Advanced, in order to satisfy the requirement condition that the peak speed is 1 Gbit/s, Single-User MIMO (SU-MIMO in which multiple antennas of one or multiple base station devices and multiple antennas of one mobile station device constitute MIMO) technology, which can multiplex up to 8 streams, has also been considered.
Not only the SU-MIMO that increases the throughput of a specific mobile station device (MT), but also Multi-User MIMO (MU-MIMO in which multiple antennas of one base station device and antennas of multiple mobile station devices constitute MIMO) technology of spatially multiplexing, by a transmission process, data to be transmitted to different terminal devices are essential. Regarding the LTE system, MU-MIMO has been specified for downlink from a base station device to a mobile station device. In other words, beamforming is performed by multiplication of a linear filter, thereby performing spatial multiplexing. Regarding the MU-MIMO using the beamforming, however, it is necessary to make transmission signals to be transmitted to each mobile station device orthogonal to one another, thereby causing a reduction in flexibility of combinations of mobile station devices to be spatially multiplexed.
On the other hand, as another method of implementing spatial multiplexing, MU-MIMO using THP (MU-MIMO THP) has been proposed. This method is a method in which a base station device preliminarily subtracts from a desired signal to be transmitted to each mobile station device, interference received by the mobile station device, performs modulo arithmetic, and thereafter performs transmission. By performing the modulo arithmetic, it is possible to suppress an increase in transmission power due to the subtraction of interference. Each mobile station device performs modulo arithmetic on a reception signal again, thereby detecting the desired signal from which interference has been cancelled (Non-Patent Document 1, Non-Patent Document 2, and Non-Patent Document 4).
As technology similar to the MU-MIMO THP, there is MU-MIMO Vector Perturbation (MU-MIMO VP) (see Non-Patent Document 3). In case of performing MU-MIMO VP, a base station device generates a transmission signal in the following two steps.

1. Add to a desired signal, a signal (perturbation vector PV) corresponding to an integral multiple of the modulo width which is adequately selected.
2. Cancel interference between mobile station devices by the same process as the beamforming.

The addition of this perturbation vector is a non-linear process. For this reason, this technology as well as the THP are classified as a non-linear process.
Non-Patent Document 5 presents a pilot design and structure to support precoding on downlink MIMO. Non-Patent Document 6 proposes a method to design a spectrally efficient cooperative downlink transmission scheme employing precoding and beamforming. Patent Document 1 relates to a wireless transmission method and apparatus. Patent Document 1 relates to a precoder and method for precoding an input sequence to obtain a transmit sequence.

CITATION LIST

[Non-Patent Document]

[Non-Patent Document 1] Harashima and Miyakawa, "Matched-Transmission Technique for Channels With Intersymbol Interference", IEEE Transactions On Communications, Vol. Com-20, No. 4, pp. 774-780, August 1972.
[Non-Patent Document 2] J. Liu and A. Krzymien, "Improved Tomlinson-Harashima Precoding for the Downlink of Multiple Antenna Multi-User Systems", Proc. IEEE Wireless and Communications and Networking Conference, pp.

466-472, March 2005.

[Non-Patent Document 3] B. M. Hochwald, C. B. Peel, and A. L. Swindlehurst," A Vector-Perturbation Technique for Near-Capacity Multiantenna Multiuser Communication-Part II: Perturbation," IEEE Trans. Commun., vol. 53, no. 3, pp. 537-544, March 2005.

[Non-Patent Document 4] M. Joham, J. Brehmer, and W. Utschick, 'MMSE approaches to multiuser spatio-temporal Tomlins-Harashima Precoding' , pp387-394, ITG SCC04, Jan 2004.

[Non-Patent Document 5] Tsuguhide Aoki, Shohei Kikuchi, Hiroki Mori "Pilot design for precoding in Multiuser MIMO on IEEE802.16m downlink; C80216m-08_205r2", EEE Draft; C80216m-08_205r2, 20080310 IEEE-SA, Piscataway, NJ USA.

[Non-Patent Document 6] Hardjawana W; Vucetic B; Yonghui Li; Zhendong Zhou: "Cooperative Multi-User MIMO Wireless Systems Employing Precoding and Beamforming", PROCEEDINGS OF THE IEEE GLOBAL TELECOMMUNICATIONS CONFERENCE, 2, 20091130.

[Patent Document]

[Patent Document 1] WO 2009 / 096345 A2,
[Patent Document 2] EP 1 782 554 A1

DISCLOSURE OF THE INVENTION

Problems to be Solved by the Invention

For a communication system in which the modulo arithmetic and the addition of a perturbation vector (non-linear process), which are the characteristics of the MU-MIMO THP and the MU-MIMO VP, are performed on the transmission side, it is necessary to perform the modulo arithmetic also on the mobile station device side. For this reason, in such a communication system, if spatial multiplexing is to be performed with respect to mobile station devices including a mobile station device which belongs to a different communication system and does not perform modulo arithmetic, a problem arises in that such a mobile station device cannot receive the signal subjected to the above non-linear process. In other words, there has been a defect such that backward compatibility cannot be maintained. An object of the present invention is to solve such problems.

Means for Solving the Problems

The present invention has been made to solve the above problem. The invention is defined by the independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/ or examples mentioned in the description that do not fall under the scope of the claims are useful for understanding the invention. The present invention is a communication system including: one or a plurality of first communication devices configured to spatially multiplex a plurality of streams on which a plurality of data signals are superimposed and to transmit the plurality of streams spatially multiplexed from a plurality of antennas; and a plurality of second communication devices configured to receive the plurality of data signals by receiving the plurality of streams through an antenna. The first communication device includes: a converting device configured to perform equivalent conversion on a part of the plurality of data signals; and a weighting device configured to cancel at least a part of interferences among the plurality of streams spatially multiplexed, with respect to at least a part of the plurality of data signals. A part of the plurality of second communication devices includes a converting device configured to reconstruct the plurality of data signals subjected to the equivalent conversion, upon receipt of the plurality of data signals subjected to the equivalent conversion.

(2) Regarding the communication system according to the present invention, the first communication device includes a determining unit configured to determine a THP-compliant second communication device among the plurality of second communication devices.

(3) Regarding the communication system according to the present invention, the first communication device includes a determining unit configured to determine a non-THP-compliant second communication device among the plurality of second communication devices.

(4) Regarding the communication system according to the present invention, the part of the plurality of second communication devices is configured to transmit to the first communication device, a signal indicating that the part of the plurality of second communication devices is THP-compliant.

(5) Regarding the communication system according to the present invention, a second communication device of the plurality of second communication devices excluding the part of the plurality of second communication devices is configured to transmit to the first communication device, a signal indicating that the second communication device is non-THP-compliant.

(6) Regarding the communication system according to the present invention, a second communication device of the plurality of second communication devices excluding the part of the plurality of second communication devices is configured to be free of the converting device and to receive the plurality of data signals.

(7) Regarding the communication system according to the present invention, a second communication device of the plurality of second communication devices excluding the part of the plurality of second communication devices belongs to a different system.

(8) Regarding the communication system according to the present invention, the first communication device includes: a generating device configured to generate a plurality of common reference symbols for estimating a channel value for a space in which the plurality of streams are spatially multiplexed; and a generating device configured to generate a plurality of dedicated reference symbols for estimating a channel value for an equivalent channel in consideration of a weight used by the weighting device.

(9) Regarding the communication system according to the present invention, the part of the plurality of second communication devices is configured to estimate the equivalent channel using the plurality of dedicated reference symbols.

(10) Regarding the communication system according to the present invention, the weighting device is configured to cancel all of the interferences.

(11) Regarding the communication system according to the present invention, the weighting device is configured to cancel a part of the interferences, and the other part of the interferences is cancelled by another interference subtracting device.

(12) Regarding the communication system according to the present invention, the converting device configured to perform the equivalent conversion is configured to use a perturbation vector.

(13) Regarding the communication system according to the present invention, the converting device configured to perform the equivalent conversion is configured to use a modulo arithmetic device as a method of selecting the perturbation vector.

(14) Regarding the communication system according to the present invention, the first communication device includes a plurality of antennas that are equal in number to the plurality of second communication devices, and each of the plurality of second communication devices includes an antenna.

(15) Regarding the communication system according to the present invention, the part of the plurality of second communication devices includes a plurality of antennas.

(16) The present invention has been made to solve the above problem. The present invention is a communication device including a plurality of transmission and reception antennas and configured to spatially multiplex a plurality of streams on which a plurality of data signals are superimposed and to transmit the plurality of streams spatially multiplexed from the plurality of antennas. The communication device includes: a converting device configured to perform equivalent conversion on a part of the plurality of data signals; and a weighting device configured to previously cancel at least a part of interferences among the plurality of streams spatially multiplexed, with respect to at least a part of the plurality of data signals.

(17) The present invention has been made to solve the above problem. The present invention is a communication method of spatially multiplexing a plurality of streams on which a plurality of data signals are superimposed, transmitting the plurality of streams spatially multiplexed from a plurality of antennas included in one or a plurality of first communication devices, and receiving the plurality of data signals by receiving the plurality of streams through an antenna included in each of a plurality of second communication devices. The communication method includes steps by the first communication device of: performing equivalent conversion on a part of the plurality of data signals; and canceling at least a part of interferences among the plurality of streams spatially multiplexed, with respect to at least a part of the plurality of data signals. The communication method further includes steps by a part of the plurality of second communication devices of: reconstructing the plurality of data signals subjected to the equivalent conversion, upon receipt of the plurality of data signals subjected to the equivalent conversion.

(18) The present invention has been made to solve the above problem. The present invention is a processor included in a first communication device in a communication system including: one or a plurality of first communication devices configured to spatially multiplex a plurality of streams on which a plurality of data signals are superimposed and to transmit the plurality of streams spatially multiplexed from a plurality of antennas; and a plurality of second communication devices configured to receive the plurality of data signals by receiving the plurality of streams through an antenna. The processor includes: a converting device configured to perform equivalent conversion on a part of the plurality of data signals; and a weighting device configured to cancel at least a part of interferences among the plurality of streams spatially multiplexed, with respect to at least a part of the plurality of data signals.

(19) The present invention has been made to solve the above problem. The present invention is a processor included in a part of a plurality of second communication devices in a communication system including: one or a plurality of first communication devices configured to spatially multiplex a plurality of streams on which a plurality of data signals are superimposed and to transmit the plurality of streams spatially multiplexed from a plurality of antennas; and the plurality of second communication devices configured to receive the plurality of data signals by receiving the plurality of streams through an antenna. The processor includes a converting device configured to reconstruct the plurality of data signals subjected to the equivalent conversion, upon receipt of the plurality of data signals subjected to the equivalent conversion.

(20) The present invention has been made to solve the above problem. The present invention is a communication system including: one or a plurality of first communication devices configured to spatially multiplex a plurality of streams on which a plurality of data signals are superimposed and to transmit the plurality of streams spatially multiplexed from a plurality of antennas; and a plurality of second communication devices configured to receive the plurality of data signals by receiving the plurality of streams through an antenna. A part of the plurality of second communication devices is configured to transmit to the first communication device, a signal indicating that the part of the plurality of second communication devices is THP-compliant.

(21) Regarding the communication system according to the present invention, a second communication device of the plurality of second communication devices excluding the part of the plurality of second communication devices is configured to transmit to the first communication device, a signal indicating that the second communication device is non-THP-compliant.

(22) Regarding the communication system according to the present invention, the first communication device includes a determining unit configured to determine a THP-compliant second communication device among the plurality of second communication devices.

(23) Regarding the communication system according to the present invention, the first communication device includes a determining unit configured to determine a non-THP-compliant second communication device among the plurality of second communication devices.

Effects of the Invention

According to the present invention, in case of wireless communication, both a communication device that performs non-linear arithmetic, such as modulo arithmetic, and a mobile station device that does not perform this arithmetic can be spatially multiplexed, thereby enabling communication in a state in which there are both types of mobile station devices.

BRIEF DESCRIPTION OF THE DRAWINGS

FIG. 1 is a schematic diagram illustrating a wireless communication system according to a first embodiment of the present invention.
FIG. 2 is a schematic block diagram illustrating a configuration of a base station device.
FIG. 3 is a schematic block diagram illustrating a configuration of a signal replacing unit.
FIG. 4 is a block diagram illustrating the derail of a filter calculator.
FIG. 5 is a schematic block diagram illustrating a configuration of an interference calculator.
FIG. 6 is a flowchart illustrating operation of a THP unit.
FIG. 7 is a schematic block diagram illustrating a configuration of a mobile station device.
FIG. 8 is a schematic block diagram illustrating a configuration of another mobile station device.
FIG. 9 is a schematic block diagram illustrating a primary part of a base station device according a modified example.
FIG. 10 is a conceptual diagram illustrating a process of a frame constructor.
FIG. 11 is a schematic block diagram illustrating a configuration of an OFDM signal modulator.
FIG. 12 is a schematic diagram illustrating a primary configuration of a mobile station device.
FIG. 13 is a schematic diagram illustrating a wireless communication system according to a second embodiment of the present invention.
FIG. 14 is a schematic block diagram illustrating a configuration of a primary part of a base station device.
FIG. 15 is a schematic block diagram illustrating a configuration of a mobile station device.
FIG. 16 is a block diagram illustrating a configuration of a primary part of a base station device in a wireless communication system according to a third embodiment of the present invention.

FIG. 17 is a block diagram illustrating a configuration of a primary part of a base station device in a wireless communication system according to a fourth embodiment of the present invention.

FIG. 18 is a schematic diagram illustrating a wireless communication system according to a fifth embodiment of the present invention.

FIG. 19 is a block diagram illustrating a configuration of a base station device.

FIG. 20 is a block diagram illustrating the detail of a perturbation vector VP unit.

FIG. 21 is a block diagram illustrating the detail of a perturbation vector VP to be used by a base station device in a wireless communication system according to a sixth embodiment of the present invention.

## BEST MODE FOR CARRYING OUT THE INVENTION

[First Embodiment]

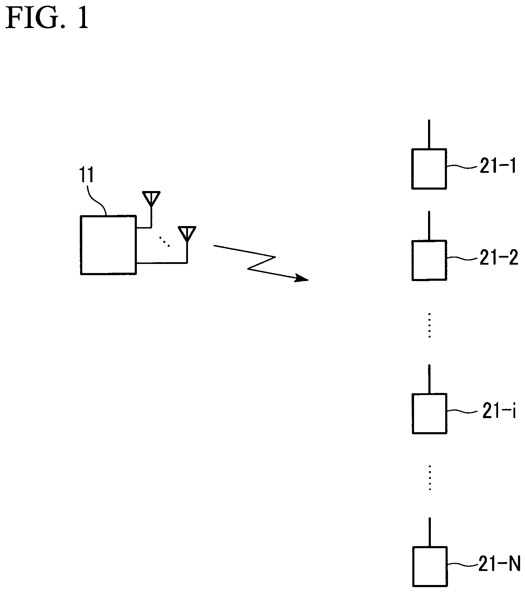

FIG. 1 is a schematic diagram illustrating a communication system according to a first embodiment of the present invention. This communication system includes one first communication device 11 and N second communication devices 21-1, ..., 21-i, ..., 21-N. Here, N is an integer equal to or greater than 2. The first communication device 11 includes N antennas and wirelessly communicates with the second communication devices 21-1, ..., 21-i, ..., 21-N. The second communication devices 21-1, ..., 21-i, ..., 21-N are collectively referred to as second communication devices 21 in some cases. This applies to explanations of other embodiments and modified examples. The first communication device 11 sends (transmits) spatially-divided N streams on which different data signals are superimposed. The second communication devices 21 receive (receive) these streams.

Each of the second communication devices 21 includes one antenna. A specific second communication device 21-i is a non-THP-compliant communication device (hereinafter, occasionally referred to as a "non-THP-compliant MT"). Other second communication devices are THP-compliant communication devices (hereinafter, occasionally referred to as "THP-compliant MT"). The THP-compliant and the non-THP-compliant are explained later.

The first embodiment is applicable to a case in which N-1 THP-compliant MTs are spatially multiplexed and only one more non-THP-compliant MT is further spatially multiplexed therewith.

As an example, the first communication device 11 is a base station device in a mobile communication system or a fixed communication system. The second communication devices 21 are terminal devices in that system. Hereinafter, it is assumed that the first communication device is a base station device in a mobile communication system, and the second communication device is a mobile station device in that system. This assumption similarly applies to other embodiments and modified examples.

[Configuration of Base Station Device]

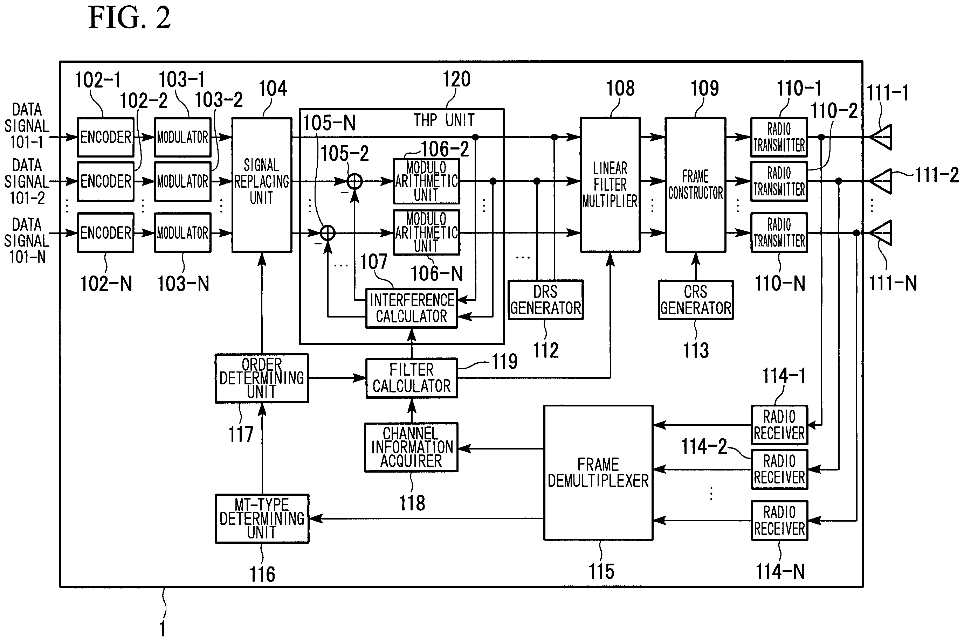

FIG. 2 is a schematic block diagram illustrating a configuration of the base station device 11.

The base station device 11 includes: encoders 102-1, 102-2, ..., 102-N; modulators 103-1, 103-2, ..., 103-N; a signal replacing unit 104; interference subtractors 105-1, ..., 105-N; modulo arithmetic units 106-2, ..., 106-N; an interference calculator 107; a linear filter multiplier 108; a frame constructor 109; radio transmitter 110-1, 110-2, ..., 110-N; antenna units 111-1, 111-2, ..., 111-N; a DRS generator 112; a CRS generator 113; radio receivers 114-1, 114-2, ..., 114-N; a frame demultiplexer 115; an MT-type determining unit 116; an order determining unit 117; a channel information acquirer 118; and a filter calculator 119. The interference subtractors 105-2, ..., 105-N, the modulo arithmetic units 106-2, ..., 106-N, and the interference calculator 107 constitute a THP unit 120.

Additionally, constituent units excluding the antenna units 111-1, 111-2, ..., 111-N (units indicated by: 102-1, 102-2, ..., 102-N; 103-1, 103-2, ..., 103-N; 104; 105-2, ..., 105-N; 106-2, ..., 106-N; 107; 108; 109; 110-1, 110-2, ..., 110-N; 112; 113; 114-1, 114-2, ..., 114-N; 115; 116; 117; 118; and 119) constitute a processor unit 1.

Next, overall operation of the base station device 11 is explained, and thereafter, the details of each constituent part are explained.

The data signals 101-1, 101-2, ..., 101-N to be transmitted to the mobile station devices 21-1, 21-2, ..., 21-N are input to the encoders 102-1, 102-2, ..., 102-N in this order, and are subjected to error correction coding. Here, this order is arbitrary. These encoded signals are input to the modulators 103-1, 103-2, ..., 103-N, and are subjected to modulation, such as QPSK (Quadrature Phase Shift Keying) or 16QAM (Quadrature Amplitude Modulation). Then, the signals output from the modulators 103-1, 103-2, ..., 103-N are input to the signal replacing unit 104.

The signals output from the signal replacing unit 104 are given to the linear filter multiplier 108 via the THP unit 120. One of the signals output from the modulators 103-1, ..., 103-N is given directly to the linear filter multiplier 108 through the THP unit 120. However, the remaining N-1 signals are subjected to subtraction of interference signals performed by the interference subtractors 105-2, ..., 105-N, are subjected to modulo arithmetic by the modulo arithmetic units 105-2 to 105-N in order to reduce the transmission power, and thereafter are given to the linear filter multiplier 108.

Not only the signals output from the aforementioned THP unit 120, but also dedicated reference symbols DRS output from the DRS generator, are given to the inputs of the linear filter multiplier 108. These two types of signals are time-division-multiplexed, and then are subjected to the following filtering process.

The linear filter multiplier 108 performs a filtering with a weighting matrix Q on those input signals. The signals output from the linear filter multiplier 108 are given to the frame constructor 109.

The frame constructor 109 receives not only the signals output from the linear filter multiplier 108, but also an input signal from the CRS (Common Reference Symbol) generator 113. The frame constructor 109 time-division-multiplexes these input signals, and then gives the resultant signals to the radio transmitters 110-1, ..., 110-N. The radio transmitters 110-1, ..., 110-N perform digital-to-analog conversion on the signals received from the frame constructor 109, upconverts the converted analog signals into radio frequency signals to be superimposed on carrier waves, and thereafter gives the radio frequency signals to the antennas 112-1, ..., 112-N. These radio signals are transmitted from the antennas 112-1, ..., 112-N.

On the other hand, the antenna units 112-1, ..., 112-N give the radio signals received from the mobile station devices 21-1, .., 21-N to the radio receivers 114-1, ..., 114-N. The radio receivers 114-1, ..., 114-N downconvert the radio signals received from the antenna units 111-1, .., 111-N into baseband signals, performs analog-to-digital conversion, and then give those output signals to the frame demultiplexer 115.

The frame demultiplexer 115 performs the following frame demultiplexing on the signals received from the radio receivers 114-1, ..., 114-N. In other words, the frame demultiplexer 115 gives a signal relating to channel state information to the channel state acquirer 118, and gives to the MT-type determining unit 116, a signal relating to the MT-types of the mobile station devices 21, that are, whether the mobile station devices 21 are THP-compliant or non-THP-compliant. In addition to that, the frame demultiplexer 115 outputs to an external unit (not shown in FIG. 2), data signals which are received from the mobile station devices 21 and demultiplexed by the frame demultiplexer 115.

The MT-type determining unit 116 generates MT-type information of the mobile station devices 21, and gives the MT-type information to the order determining unit 117.

The order determining unit 117 generates, based on the MT-type information, a signal relating to order information that defines the order of the data signals 101-1, 101-2, ..., 101-N, and gives the generated signal to the signal replacing unit 104 and the filter calculator 119.

The channel information acquirer 118 receives the signal relating to the channel state information from the frame demultiplexer 115, and gives the received signal to the filter calculator 119.

Based on the signal relating to the channel information received from the channel information acquirer 118 and the signal relating to the order information received from the order determining unit 117, the filter calculator 119 generates a signal that will be explained later, and gives the generated signal to the interference calculator 107 and the linear filter multiplier 108.

Hereinafter, the details of each constitutional unit are explained.

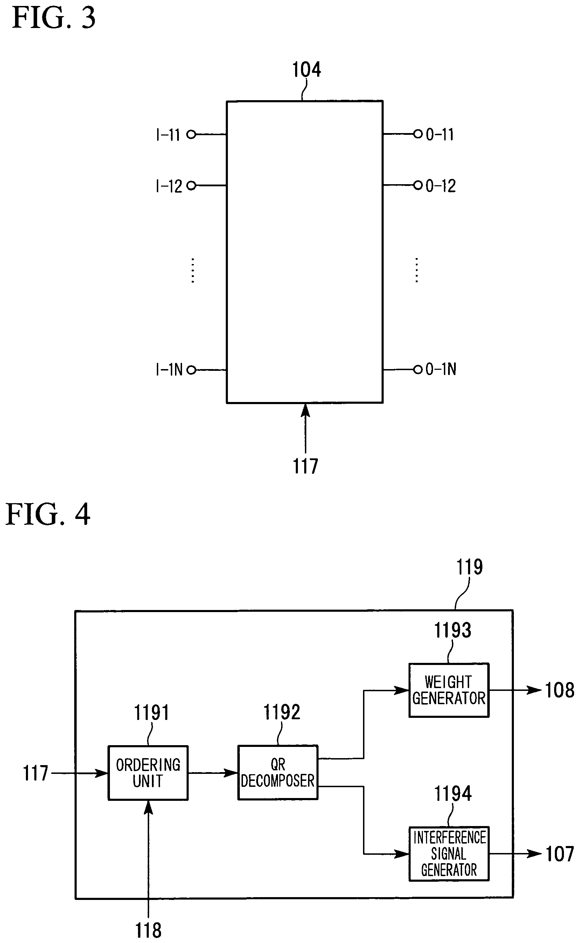

FIG. 3 illustrates a detailed diagram illustrating the signal replacing unit 104. The signal replacing unit 104 is a switch including: N input terminals I-11, 1-12, ..., I-1N; and N output terminals O-11, 0-12, ..., O-1N. The signal output from the modulator 103-1 is given to the input terminal I-11 of the signal replacing unit 104, the signal output from the modulator 103-2 is given to the input terminal 1-12 of the signal replacing unit 104, and the like. According an instruction from the order determining unit 117, the signal replacing unit 104 changes the order of the signals given to the input terminals I-11, I-12, ..., I-1N, and outputs the sorted signals to the output terminals O-11, O-12, ..., O-1N, respectively.

According to the MT-types of the mobile station devices 21-1 to 21-N, the order determining unit 117 determines the order so that a non-THP-compliant mobile station device becomes the first. In other words, since the current order of the mobile station devices is (1, 2, ..., i, ..., N), the order determining unit 117 performs ordering that changes the order to (i, 2, ..., 1, ..., N), and outputs a signal indicating this information. In other words, this change is the replacement of (1, i). The above order determination is an example, and as long as an ordering that changes the order so as to make information indicating a non-THP-compliant mobile station device (i) be the first is performed, the order of other information is arbitrary. As will be explained later, however, this order achieves an effect that will be explained later, in a modified example.

Upon receiving the signal from the order determining unit 117, the signal replacing unit 104 controls a modulation signal to be transmitted to a non-THP-compliant mobile station device so as to be output from the first output terminal O-1 of the signal replacing unit 104.

The channel information acquirer 118 generates channel information in which channel informations transmitted from the mobile station devices 21-1, ..., 21-N are combined. In other words, for example, if complex gains relating to information data signals on channels from N antennas of the base station device 11 to an antenna of the k-th mobile station device 21-k are sequentially denoted as $[h_{k,1}, ..., h_{k,N}]$, this can be expressed as a $1 \times N$ channel matrix $h_k$. The channel information acquirer 118 combines channel informations transmitted from multiple mobile station devices 21 to generate channel information. The combined channel informations can be expressed as an NxN matrix H, as shown by the following formula (1)

$$H=[h_1{}^t, ..., h_N{}^t]^t \qquad\qquad (1)$$

Here, the suffix t denotes a transpose of a matrix.

The channel information acquirer 118 gives to the filter calculator 119, a signal indicating the matrix H that is the combined channel information.

FIG. 4 is a schematic block diagram illustrating the filter calculator 119. The filter calculator 119 includes: an ordering unit 1191; a QR decomposer; a weight generator 1193; and an interference signal generator 1194.

According to the signal corresponding to the order information received from the order determining unit 117, the ordering unit 1191 replaces a row of the channel matrix H to generate a new channel matrix H' as shown by the following formula (2).

[Formula 1]

$$\mathbf{H} = [h_1{}^t, h_2{}^t, \cdots, h_i{}^t, \cdots, h_N{}^t]^t \rightarrow \mathbf{H'} = [h_i{}^t, h_2{}^t, \cdots, h_1{}^t, \cdots, h_N{}^t]^t \qquad (2)$$

In other words, the channel matrix $h_i$ of the non-THP-compliant mobile station device 21-i moves to the first row.

The signal relating to the new channel matrix H' output from the ordering unit 1191 is given to the QR decomposer 1192. The QR decomposer 1192 generates a matrix H'$^H$ which is a Hermitian conjugate of the channel matrix H'. The suffix H denotes a Hermitian conjugate of a matrix. Then, a known QR decomposition is performed on this matrix H'$^H$ as shown by the following formula (3).

$$H'^H = QR \qquad\qquad (3)$$

Here, Q denotes an orthogonal matrix, and R denotes an upper triangular matrix. The signal corresponding to the matrix Q is given to the weight generator 1193. The signal corresponding to the matrix R is given to the interference signal generator 1194.

The weight generator 1193 gives to the linear filter multiplier 108, the received matrix Q as a signal corresponding to a weighting matrix.

On the other hand, the interference signal generator 1194 generates a matrix R$^H$ that is a Hermitian conjugate of the received matrix R.

As explained above, the linear filter multiplier 108 subjects transmission signals to a filtering with the weighting matrix Q. For this reason, complex gains of the equivalent channel relating to the data signals in consideration of that respect are H'Q. Then, H'Q can be expressed by the following formula (4).

$$H'Q = (QR)^H Q = R^H \qquad\qquad (4)$$

In other words, the matrix R$^H$ denotes complex gains of the equivalent channel. Further, the matrix R$^H$ is a lower triangular matrix and elements of the first row are zero except for the element in the first row and the first column which is the diagonal element. In other words, the first mobile station device does not receive interference from transmission signals addressed to other mobile station devices. Accordingly, it is possible to transmit to a non-THP-compliant mobile station device, an information data signal as it is without performing interference subtraction and modulo arithmetic which will be explained later. Other than that, interference elements are reduced for a second communication device corresponding to the second or subsequent number. A rate of that reduction is gradually lowered such that the reduction rate for the second communication device is lower than that for the first communication device, the reduction rate for the third communication device is lower than that for the second communication device, and the like.

The interference signal generator 1194 extracts only diagonal elements from the matrix R$^H$ to generate a matrix A. Then, the interference signal generator 1194 multiplies the matrix R$^H$ by an inverse matrix A$^{-1}$ of the matrix A to generate a matrix A$^{-1}$R$^H$.

This means that complex gains of the equivalent channel are divided by a gain of the desired signal and then normalized. Then, the interference signal generator 1194 subtracts a unit matrix I from the matrix A$^{-1}$R$^H$ to generate a matrix A$^{-1}$R$^H$-I. The matrix A$^{-1}$R$^H$-I is a lower triangular matrix having diagonal elements that are zero. In other words, the matrix A$^{-1}$R$^H$-I is a matrix having only non-diagonal elements left where interference signals pass, and indicates interference information obtained by normalizing complex gains of channels relating to the interference signals. Signals corresponding to the matrix A$^{-1}$R$^H$-I which is the interference information are given to the interference calculator 107.

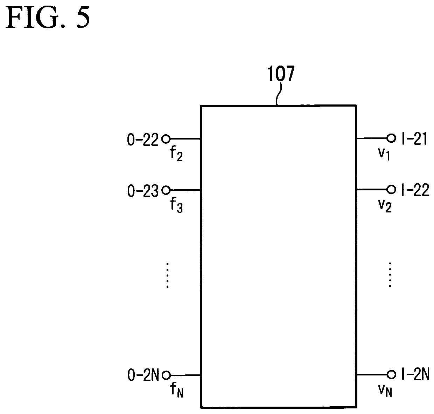

FIG. 5 is the detailed diagram illustrating the interference calculator 107.

The interference calculator 107 is a device including: N input terminals 1-21, ..., I-2N; and (N-1) output terminals O-22, ..., O-2N. The interference calculator 107 performs operations in the following order. The signal $s_1$ output from the output terminal O-11 of the signal replacing unit 104 is given to the input terminal 1-21. The signal $v_2$ output from the modulo arithmetic unit 106-2 is given to the input terminal 1-22. Likewise, the signal $v_N$ output from the modulo arithmetic unit 106-N is given to the input terminal I-2N. Here, the above signal $s_1$ is denoted as the signal $v_1$ for simplification.

The interference calculator 107 calculates interference $f_2$ and outputs the interference $f_2$ to the output terminal O-22 of the interference calculator 107. Then, the interference calculator 107 outputs the interference $f_2$ to the interference subtractor 105-2. The interference $f_2$ can be expressed by the following formula (5).

$$f_2 = (A^{-1}R^H - I)_2(v_1, 0, 0, ..., 0)^t \qquad (5)$$

The matrix $(A^{-1}R^H-I)_2$ is a $1 \times N$ matrix that is a second row of the matrix $A^1 R^H - I$ relating to the interference signals received from the filter calculator 119. The matrix $(v_1, 0, 0, ..., 0)^t$ is an $N \times 1$ matrix that is a transpose of a $1 \times N$ matrix in which an element in the first row and the first column is the signal $v_1$ and other elements are zero.

Additionally, the interference calculator 107 calculates interference $f_3$ and outputs the interference $f_3$ to the output terminal O-23 of the interference calculator 107. Then, the interference calculator 107 outputs the interference $f_3$ to the interference subtractor 105-3. The interference $f_3$ can be expressed by the following formula (6).

$$f_3 = (A^{-1}R^H - I)_3(v_1, v_2, 0, ..., 0)^t \qquad (6)$$

The matrix $(A^{-1}R^H-I)_3$ is a $1 \times N$ matrix that is a third row of the matrix $A^{-1}R^H - I$ relating to the interference signals received from the filter calculator 119. The matrix $(v_1, v_2, 0, ..., 0)^t$ is an $N \times 1$ matrix that is a transpose of a $1 \times N$ matrix in which an element in the first row and the first column is the signal $v_1$, an element in the first row and the second column is the signal $v_2$, and other elements are zero.

Likewise, the interference calculator 107 calculates interference $f_N$ and outputs the interference $f_N$ to the output terminal O-2N of the interference calculator 107. Then, the interference calculator 107 outputs the interference $f_N$ to the interference subtractor 105-N. The interference $f_N$ can be expressed by the following formula (7).

$$f_N = (A^{-1}R^H - I)_N(v_1, v_2, v_3, ..., v_{N-1}, 0)^t \qquad (7)$$

The matrix $(A^{-1}R^H-I)_N$ is a $1 \times N$ matrix that is the N-th row of the matrix $A^{-1}R^H-I$ relating to the interference signals received from the filter calculator 119. The matrix $(v_1, v_2, v_3, ..., v_{n-1}, 0)^t$ is an $N \times 1$ matrix that is a transpose of a $1 \times N$ matrix in which an element in the first row and the first column is the signal $v_1$, likewise, an element in the first row and the (N-1) column is the signal $v_{N-1}$, and the last element in the first row and the N-th column is zero.

As explained above, the interference calculator 107 obtains the signal $s_1$ (signal $v_1$) first, and calculates the interference $f_2$ from the obtained signal and the matrix $A^{-1}R^H-I$. Then, the interference calculator 107 obtains the signal $s_2$, and calculates the interference $f_3$ from the signals $v_1$ and $v_2$ and the matrix $A^{-1}R^H-I$. Likewise, the interference calculator 107 finally calculates interference $f_N$.

The interference subtractors 105-2, ..., 105-N subtract the interferences $f_2$, ..., $f_N$ received from the interference calculator 107, from the signals $s_2$ to $s_N$ received from the signal replacing unit 104. In other words, the interference subtracter 105-2 outputs the signal having a value $s_2$-$f_2$ to the modulo arithmetic unit 105-2. Likewise, the interference subtractor 105-N outputs the signal having a value $s_N$-$f_N$ to the modulo arithmetic unit 105-N.

The modulo arithmetic unit 105-2 outputs from a signal $(s_2$-$f_2)$, a signal $v_2$ which is expressed by the following formula (8).

$$v_2 = \text{Mod}_r(s_2 - f_2) \qquad (8)$$

Likewise, the modulo arithmetic unit 105-N outputs from a signal $(s_N$-$f_N)$, a signal $v_N$ which is expressed by the following formula (9).

$$v_N = Mod_\tau(s_N - f_N) \qquad\qquad (9)$$

Here, the modulo function Mod(x) indicates a modulo arithmetic expressed by the following formula (10) with respect to a variable x.

[Formula 2]

$$Mod_\tau(x) = x - floor\left(\frac{Re(x) + \frac{\tau}{2}}{\tau}\right)\tau - j \cdot floor\left(\frac{Im(x) + \frac{\tau}{2}}{\tau}\right)\tau \qquad (10)$$

Here, j denotes an imaginary unit, Re(x) denotes a real part of x, and Im(x) denotes an imaginary part. floor(x) denotes the maximum integer that does not exceed x. Additionally, $\tau$ denotes the modulo width that is a number greater than the width of a constellation (signal constellation) with respect to a modulation scheme for a desired signal. For example, in case that the modulation scheme is QPSK (Quadrature Phase Shift Keying), the modulo width is preferably set to be two times the minimum distance between each of constellation points. In case that the modulation scheme is 16QAM (16 Quadrature Amplitude Modulation), the modulo width is preferably set to be four times the minimum distance between each of constellation points. However, another value may be set. This value $\tau$ is a value preliminarily shared between the base station device 11 and the mobile station device 21.

The function Mod(x) indicates a modulo arithmetic that subtracts a value of the function floor(x) from the variable x. In this manner, if a point translated by the cycle $\tau$ by the modulo arithmetic and the original point are regarded as the same point, a value of the variable x and a value of Mod(x) are in equivalence relation, and the square of an absolute value of the latter (power) is decreased than that of the former.

The signals $v_1$, ..., $v_N$ output from the THP unit 120, as well as the outputs of the DRS generator 112 that outputs dedicated reference symbols, are given to the linear filter multiplier 108.

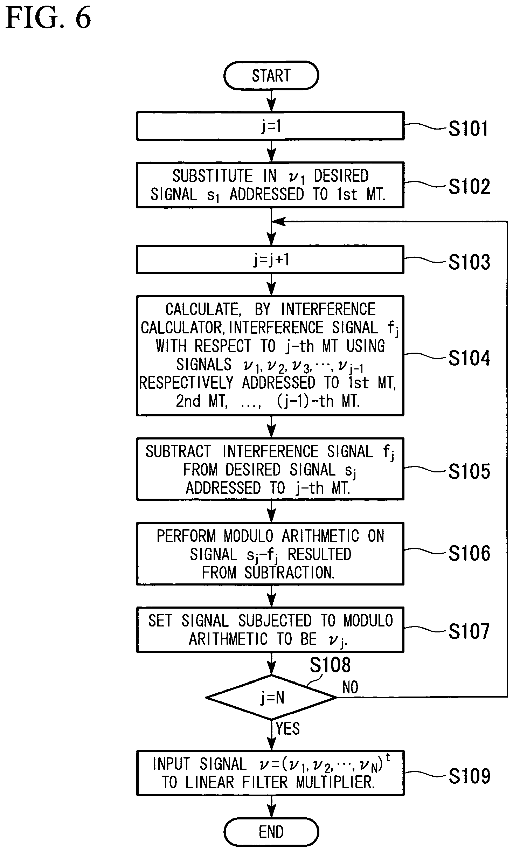

Next, the overall operation of the THP unit 120 is explained with reference to the flowchart shown in FIG. 6.

(Step S101) A variable j is set to be 1, and the routine proceeds to step S102. Here, the variable j is stored in a memory (not shown) of the interference calculator 107.

(Step S102) The interference calculator 107 inputs the signal $s_1$ output from the first modulator 103-1 to $v_1$. Then, the routine proceeds to step S103.

(Step S103) 1 is added to the variable j, and the routine proceeds to step S104.

(Step S104) The interference calculator 107 calculates an interference signal $f_j$ using the signals $v_1$, ..., $v_{j-1}$). Then, the routine proceeds to step S105.

(Step S105) The interference subtractor 105-j subtracts the interference signal $f_j$ from the signal $s_j$ output from the j-th modulator 103-j. Then, the routine proceeds to step S106.

(Step S106) The modulo arithmetic unit 106-j performs modulo arithmetic on the signal $s_j - f_j$. Then, the routine proceeds to step S107.

(Step S107) The signal subjected to the modulo arithmetic is set to be $v_j$. Then, the routine proceeds to step S108.

(Step S108) The THP unit 120 determines whether or not the variable j is equal to the integer N. If it is determined that the variable j is equal to the integer N, the routine proceeds to step S109. If it is determined that the variable j is not equal to the integer N, the routine returns to step S103.

(Step S109) The THP unit 120 outputs the signals ($v_1$, $v_2$, ..., $v_N$) to the linear filter multiplier 108.

Next, the linear filter multiplier 108 is explained. The linear filter multiplier 108 is a filter including N input terminals and N output terminals. Filter characteristics can be expressed by a weighting matrix Q. As explained above, the dedicated reference symbols DRS ($v_{01}$, $v_{02}$, ..., $v_{0N}$) are given to the N input terminals of the linear filter multiplier 108, respectively. These two types of signals are time-division-multiplexed to be signals ($v_{21}$, $v_{22}$, ..., $v_{2N}$). The linear filter multiplier 108 multiplies the time-division-multiplexed signals by the weight Q to obtain output signals ($\mu_1$, $\mu_2$, ..., $\mu_N$) as shown by the following formula (11).

$$(\mu_1, \mu_2, ..., \mu_N)^t = Q(v_{21}, v_{22}, ..., v_{2N})^t \qquad\qquad (11)$$

In other words, the linear filter multiplier 108 outputs to the frame constructor 109, the signal ($\mu_1$, $\mu_2$, ..., $\mu_N$)

output after the multiplication. These signals are also added with the common reference symbols CRS ($\mu_{01}$, $\mu_{02}$, ..., $\mu_{0N}$) output from the CRS generator. These two types of signals are time-division-multiplexed to be signals ($\mu_{21}$, $\mu_{22}$, ..., $\mu_{2N}$) and given to the radio transmitters 110-1, ..., 110-N.

In the first frame to initiate communication between the base station device 11 and the mobile station device 21, N common reference symbols CRS are allocated by the frame constructor 109 to temporally-different symbols and are sent to the radio transmitters 110-1, ..., 110-N. However, data signals are not allocated to this frame. In each of subsequent frames, common reference symbols CRS are not allocated, but N dedicated reference symbols DRS are allocated to temporally-different symbols and are sent to the radio transmitters 110-1, ..., 110-N. Further in this case, data signals and the dedicated reference symbols DRS are time-multiplexed, allocated to symbols different from any of the dedicated reference symbols, and sent to the radio transmitters 110-1, ..., 110-N. During the communication, the common reference symbols CRS, the dedicated reference symbols, and the data signals occupy one frame by time division for every predetermined number of frames, and are sent to the radio transmitters 110-1, ..., 110-N.

The predetermined number may be varied according to the channel state between the base station device 11 and the mobile station device 21.

Additionally, the dedicated reference symbols DRS and the common reference symbols CRS may be code-multiplexed by being multiplied by an orthogonal or semi-orthogonal code, such as a Hadamard code or a Walsh code. In this case, both reference symbols can be multiplexed at a symbol interval.

As explained above, the base station device according to the first embodiment of the present invention can perform spatial multiplexing with excellent power efficiency while suppressing an increase in power due to cancellation of interference. Additionally, it is possible to perform desired communication with one mobile station device without cancelling interference and performing modulo arithmetic. Further, the dedicated reference symbols are used in addition to the common reference symbols, thereby enabling the mobile station device to perform channel compensation.

Additionally, there may be two or more base station devices so that those base station devices coordinate one another to be considered as substantially one base station device. Further, even if the base station device has more than N antennas and radio transmitters associated with those antennas, it is possible to regard those antennas equivalently as N antennas using transmission diversity, thereby enabling communication by N streams.

Moreover, as the QR decomposition by the filter calculator 119, an MMSE (Minimum Mean Squared Error) method, in which QR decomposition is performed with respect to $H'^H(H'H'^H+dI)^{-1}$, may be used. Here, d is a value obtained by dividing the power of noise received by the second communication device by the power of a transmission signal of the first communication device. Additionally, the filter calculator 119 may use ZF-BLAST-THP or MMSE-BLAST-THP to calculate a filter.

[Configuration of Mobile Station Device, Part 1]

A THP-compliant mobile station device is explained first, and thereafter a non-THP-compliant mobile station device is explained.

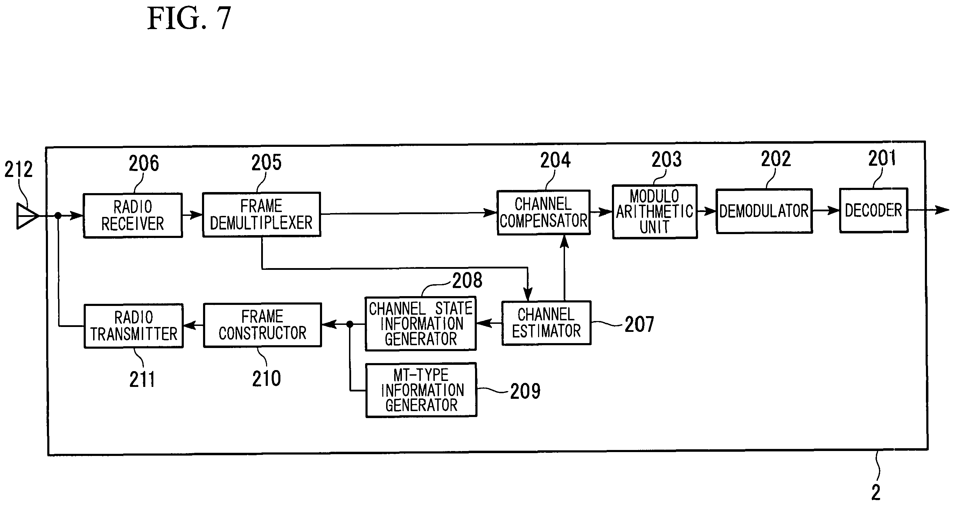

FIG. 7 is a schematic block diagram illustrating a configuration of a THP-compliant mobile station device 21-A. This mobile station device 21-A is a mobile station device other than the i-th mobile station device of the N mobile station devices shown in FIG. 1.

The mobile station device 21-A includes: a decoder 201; a demodulator 202; a modulo arithmetic unit 203; a channel compensator 204; a frame demultiplexer 205; a radio receiver 206; a channel estimator 207; a channel state information generator 208; an MT-type information generator 209; a frame constructor 210; a radio transmitter 211; and an antenna unit 212. The constituent units (indicated by 201, 202, 203, 204, 205, 206, 207, 208, 209, 210, and 211) other than the antenna unit 212 constitute a processor unit 2.

The antenna unit 212 receives a radio signal transmitted by the base station device 11 and transfers this signal to the radio receiver 206. The radio receiver 206 downconverts that radio frequency band signal into a baseband signal, performs analog-to-digital conversion, and outputs the resultant signal to the frame demultiplexer 205. The frame demultiplexer 205 demultiplexes data signals from dedicated reference symbols DRS and common reference symbols CRS that are pilot signals, and outputs the data signals to the channel compensators 204. Meanwhile, the frame demultiplexer 205 outputs the dedicated reference symbols DRS and the common reference symbols CRS to the channel estimator 207.

The channel estimator 207 outputs to the channel state information generator 208, channel state information $H_k$ estimated based on the common reference symbols CRS. Additionally, the channel estimator 207 outputs to the channel compensator 204, complex gains $r_{kk}$ (diagonal elements of a matrix $R^H$ indicating complex gains of an equivalent channel) estimated by performing channel estimation based on the dedicated reference symbols DRS.

The channel compensator 204 performs channel compensation on the information data signals received from the frame demultiplexer 205, using the complex gain $r_{kk}$ that is an element in the k-th row and the k-th column of the matrix $R^H$ that are complex gains of the equivalent channel. Then, the channel compensator 204 outputs to the modulo arithmetic unit 203, a signal $y_k$ subjected to the channel compensation. This signal $y_k$ can be expressed by the following formula (12).

$$y_k = r_{kk}(Mod_t(s_k - f_k)) + F_k \qquad (12)$$

In other words, the first term in the right side indicates that a signal $Mod(s_k - f_k)$ which has been output from the THP unit 120 shown in FIG. 2 and has propagated through the equivalent channel is equal to $Mod(s_k - f_k)$ multiplied by the complex gain $r_{kk}$ of the equivalent channel. The second term in the right side to be added to the first term is interference $F_k$ caused by a signal from another antenna of the base station device 11.

Here, the interference signal $F_k$ differs from the signal $f_k$ to be subtracted from a desired signal, and is expressed by the following.

$$F_k = (R^H - I)_k (v_1, v_2, \ldots, v_k, \ldots, 0)^t \qquad (13)$$

In other words, $F_k$ is obtained by multiplying $f_k$ by a complex gain of the equivalent channel of the desired signal. In other words,

$$F_k = r_{kk} f_k \qquad (14)$$

When this is substituted in the formula (12),

$$y_k = r_{kk}(Mod_t(s_k - f_k)) + r_{kk} f_k \qquad (15)$$

Next, the Modulo arithmetic means addition of an integral multiple of $\tau$, as explained above, and therefore when integers $N_1$ and $N_2$ are used,

$$y_k = r_{kk}((s_k - f_k) + N_1\tau + jN_2\tau) + r_{kk}f_k$$
$$= r_{kk}(s_k + N_1\tau + jN_2\tau) \qquad (16)$$

Here, when the modulo arithmetic is performed after channel compensation is performed,

$$s_k' = Mod_t(r_{kk}^{-1} y_k) = Mod_t(s_k + N_1\tau + jN_2\tau) = s_k \qquad (17)$$

In other words, the mobile station device also can finally obtain the desired signal $s_k$, thereby restoring the equivalence conversion.

The MT-type information generator (209) outputs to the frame constructor (210), a signal indicating that this mobile station device is an THP-compliant mobile station device. The channel state information generator 208 outputs to the frame constructor 210, the channel state information $H_k$ received from the channel estimator 207. The frame constructor constructs a frame using the input MT-type information and the input channel state information $H_k$, and inputs the frame to the radio transmitter. The radio transmitter performs digital-to-analog conversion on the input signal, upconverts the resultant signal into a radio frequency signal, and transmits the radio frequency signal to the transmission device.

Here, the MT-type information may be reported each time the channel state information is transmitted to the base station device 11. Alternatively, the MT-type information may be reported only once by the first frame when communication is initiated, or once every time a predetermined number of frames are transmitted. Additionally, the mobile station device 21-A transmits to the base station device, the MT-type information or the channel state information using an uplink control channel or a data channel which is allocated to the mobile station device 21-A.

[Configuration of Mobile Station Device, Part 2]

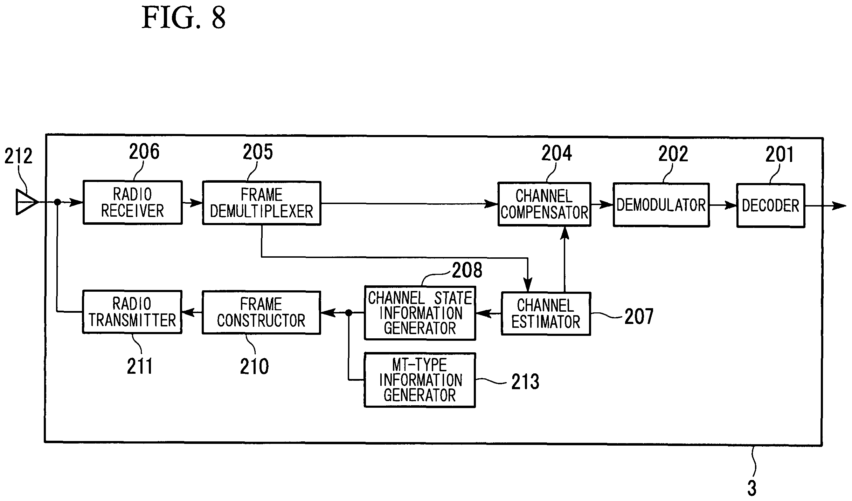

FIG. 8 is a schematic block diagram illustrating a configuration of a non-THP-compliant mobile station device 21-B. This mobile station device 21-B is the i-th mobile station device of the N mobile station devices shown in FIG. 1.

The mobile station device 21-B includes: the decoder 201; the demodulator 202; the channel compensator 204; the frame demultiplexer 205; the radio receiver 206; the channel estimator 207; the channel state information generator 208; an MT-type information generator 213; the frame constructor 210; the radio transmitter 211; and the antenna unit 212. The constituent units (indicated by 201, 202, 204, 205, 206, 207, 208, 210, 211, and 213) other than the antenna unit 212 constitute a processor unit 3.

If the configuration of the non-THP-compliant mobile station device 21-B shown in FIG. 8 is compared to the configuration of the THP-compliant mobile station device 21 shown in FIG. 7, the differences exist only in that the former includes the MT-type information generator 213 and lacks the modulo arithmetic unit 209 which is included in the latter. Other constituent units (201, 202, 204, ..., 208, 210, ..., 212) are the same, and therefore explanations thereof are omitted here.

The channel compensator 204 performs channel compensation on the information data signal received from the frame demultiplexer 205. The reception signal subjected to the channel compensation is output to the demodulator 202 without performing the aforementioned modulo arithmetic, and then is subjected to demodulation.

Then, the MT-type information generator (213) outputs to the frame constructor (210), a signal indicating that this mobile station device is a non-THP-compliant mobile station device.

According to the first embodiment, it is possible to perform communication using MU-MIMO THP in a state where a non-THP-compliant mobile station device and THP-compliant mobile station devices are mixed. Additionally, it is possible to perform communication with the THP-compliant mobile station devices using the modulo arithmetic while suppressing the transmission power, thereby further improving the power efficiency than that in the conventional case of beamforming.

<Modified Example>

In the aforementioned first embodiment, one mobile station device of the N mobile station devices 21 that perform single-carrier wireless communication with one base station device 11 is non-THP compliant.

In the present modified example, multicarrier, especially OFDM (Orthogonal Frequency Division Multiplexing), is used as carriers that transmit information data signals. Each of W subcarriers transmits, according to the invention of the first embodiment, a data signal from the common base station device 12 to an associated one of multiple mobile station devices 22-1, ..., 22-N. For this reason, the base station device 12 can communicate with W non-THP-compliant mobile station devices 22.

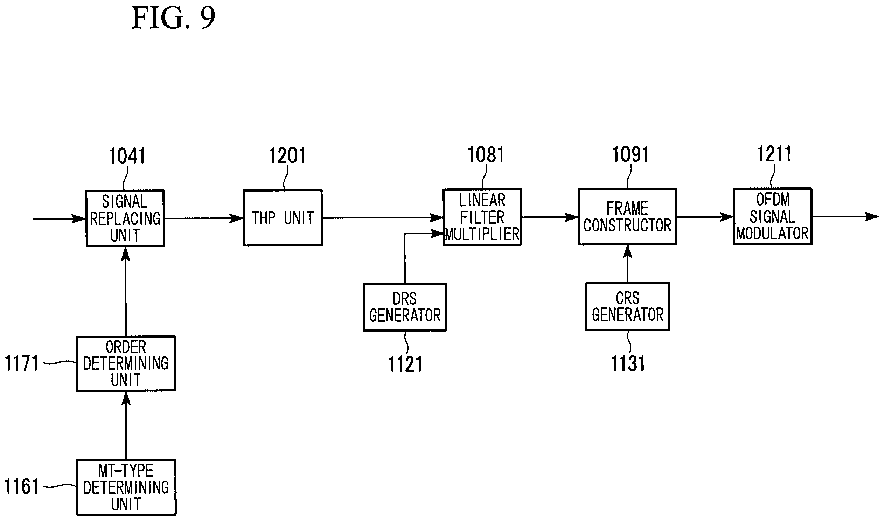

FIG. 9 is a schematic block diagram illustrating a configuration of a primary transmission part of the base station device 12. A configuration including the other reception part is the same as that of the first embodiment.

The primary transmission part of the base station device 12 includes: a signal replacing unit 1041; a THP unit 1201; a linear filter multiplier 1081; a frame constructor 1091; an OFDM signal modulator 1211; a DRS generator 1121; a CRS generator 1131; an MT-type determining unit 1161; and an order determining unit 1171.

Under control of the order determining unit 1171, the signal replacing unit 1041 groups modulation signals into groups each belonging to specific subcarriers, pass through the THP unit 1201 for each group, and are subjected to the process explained in the first embodiment. The output of the THP unit 1201 is given to the linear filter multiplier 1081. The dedicated reference symbols DRS output from the dedicated reference symbol DRS generator 1121 are also given to the linear filter multiplier 1081. The linear filter multiplier 1081 performs the process explained in the first embodiment on each group of data signals which belongs to specific subcarriers. The output of the linear filter multiplier 1081 is given to the frame constructor 1091. The common reference symbols CRS output from the CRS generator 1131 are also given to the frame constructor 1091. The output of the frame constructor 1091 is given to the OFDM signal modulator 1211.

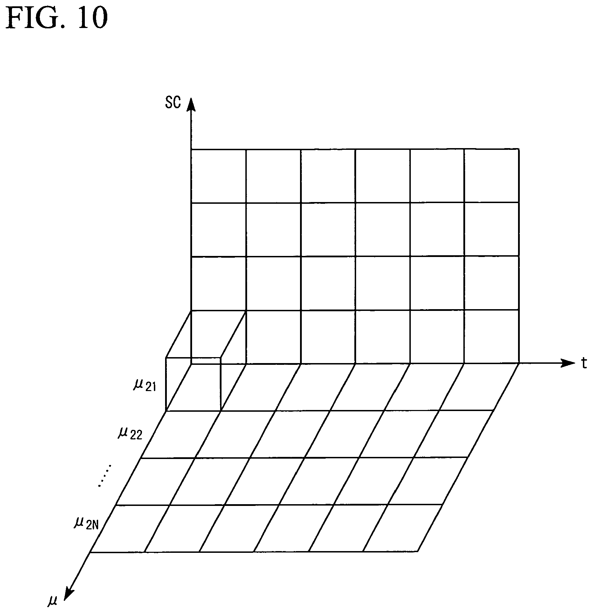

FIG. 10 is a conceptual diagram illustrating a process of the frame constructor 1091. FIG. 10 illustrates a three-dimensional space defined by a time axis t, a $\mu$-axis indicating a signal addressed to each mobile station device, and a subcarrier axis sc. In the three-dimensional space shown in FIG. 10, the aforementioned signal ($\mu_{21}$, $\mu_{22}$, ..., $\mu_{2N}$) is a signal constellation on a two-dimensional plane defined by the time axis t and the $\mu$-axis that indicates a signal addressed to each mobile station device. The frame constructor 1091 of this modified example extends this signal constellation on the two-dimensional plane upward in the direction of the frequency axis sc to generate a three-dimensional signal constellation. In FIG. 10, one frame includes 6 symbols, and the number of subcarriers is four, but this is just one of examples.

The output of the frame constructor 1091 is given to the OFDM signal modulator 1211.

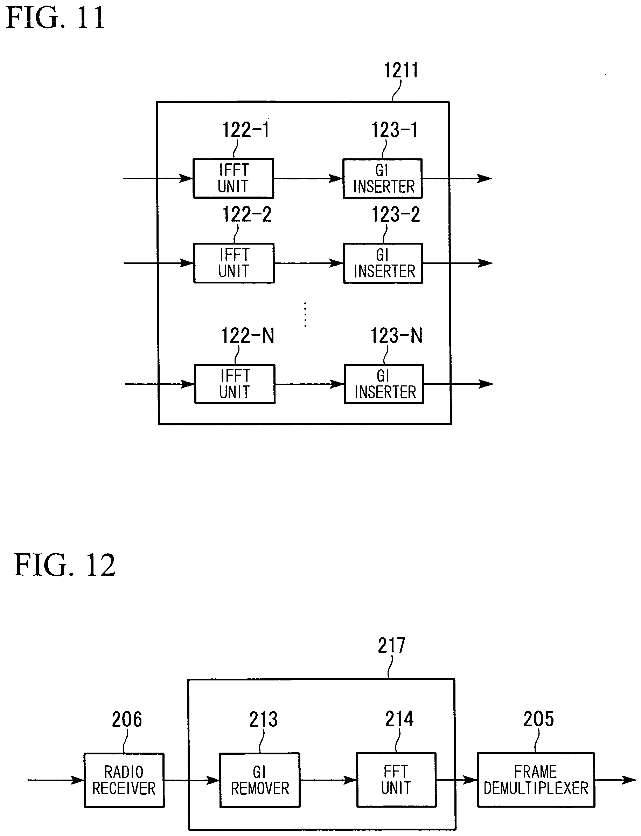

FIG. 11 is a schematic block diagram illustrating the details of the OFDM signal modulator 1211. The OFDM signal modulator 1211 includes: IFFT units 122-1, 122-2, ..., 122-N; and GI inserters 123-1; 123-2, ..., 123-N. The IFFT unit 122-1 receives from the frame constructor 1091, a signal $\mu_{21}$ corresponding to the first data signal belonging to all the subcarriers (data signal addressed to W non-THP-compliant mobile station devices). Then, the IFFT unit 122-1 performs inverse fast Fourier transform on the signal. Then, the GI inserter 123-1 inserts a guard interval into the signal and outputs the resultant signal to a radio transmitter. The IFFT unit 122-2 receives from the frame constructor 1091, a signal corresponding to the next data signal $\mu_{22}$ belonging to all the subcarriers (data signal addressed to W THP-compliant mobile station devices). Then, the IFFT unit 122-2 performs inverse fast Fourier transform on the signal. Then, the GI inserter 123-2 inserts a guard interval into the signal and outputs the resultant signal to another radio transmitter.

Likewise, the IFFT unit 122-N receives from the frame constructor 1091, a signal corresponding to a data signal $\mu_{2N}$ belonging to all the subcarriers (data signal addressed to W non-THP-compliant mobile station devices). Then, the IFFT unit 122-N performs inverse fast Fourier transform on the signal. Then, the GI inserter 123-N inserts a guard interval into the signal and outputs the resultant signal to the last radio transmitter.

FIG. 12 is a block diagram illustrating a primary part of the configuration of the mobile station device 22. Other part of the configuration is the same as that of the first embodiment.

The primary part shown in FIG. 12 includes a GI remover 213 and an FFT unit 214 between the radio receiver 206 and the frame demultiplexer 205. The GI remover 213 and the FFT unit 214 constitute an OFDM signal demodulator 217. This configuration is common to both the THP-compliant and non-THP-compliant mobile station devices.

The GI remover 213 removes a guard interval GI from the time-domain signal received from the radio receiver 206. Then, the FFT unit 214 converts the time-domain signal into frequency-domain signals. Then, the FFT unit 214 demultiplexes a desired subcarrier signal from the frequency-domain signals, and outputs the demultiplexed signal to the frame demultiplexer 205.

Regarding the processor unit 1 of the base station device 11, multiple constitutional units of the processor 1 may be implemented by a semiconductor device and a program. That program may be stored in a ROM, a PROM, or a flash memory. A control device that controls the memory may also be implemented by a semiconductor device. These semiconductor devices may by constituted by one or multiple semiconductor chips.

Alternatively, a processor may include only those of: the signal replacing unit 104; the interference subtractor 105-2, ..., 105-N; the modulo arithmetic unit 106-2, ..., 106-N; the interference calculator 107; the linear filter multiplier 108; the MT-type determining unit 116; and the ordering unit 117. In a similar manner to the above, these constitutional units may be constituted by one or multiple semiconductor chips.

Additionally, regarding the processor units 2 and 3 of the mobile station devices 21-A and 21-B, multiple constitutional units of each of the processors 2 and 3 may be implemented by a semiconductor device and a program. That program may be stored in a ROM, a PROM, or a flash memory. A control device that controls the memory may also be implemented by a semiconductor device. These semiconductor devices may by constituted by one or multiple semiconductor chips.

<Second Embodiment>

Hereinafter, a second embodiment of the present invention is explained. First, a simple example is explained with reference to the drawings, and thereafter a generalized example is explained.

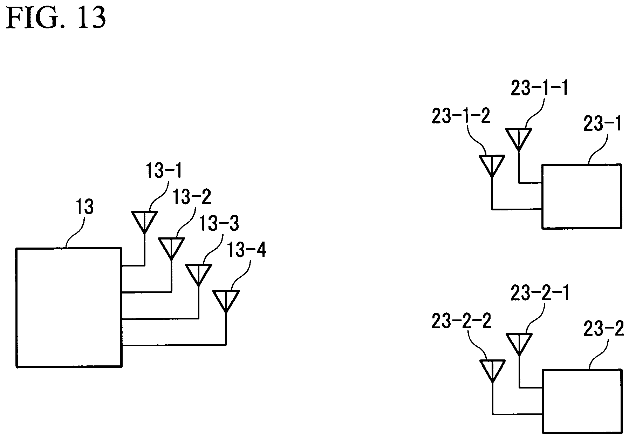

In FIG. 13, one base station device 13 wirelessly communicates with two mobile station devices 23-1 and 23-2. The base station device 13 includes four antennas 13-1, 13-2, 13-3, and 13-4. The mobile station device 23-1 includes antennas 23-1-1 and 23-1-2. The mobile station device 23-2 includes antennas 23-2-1 and 23-2-2. The mobile station device 23-1 is the aforementioned non-THP-compliant mobile station device. The mobile station device 23-2 is the aforementioned THP-compliant mobile station device. The antennas 13-1, ..., 13-4 of the base station device 13 respectively transmit four streams on which different information data are superimposed. Two streams of the four streams are transmitted to the mobile station device 23-1. Other two streams of the four streams are transmitted to the mobile station device 23-2.

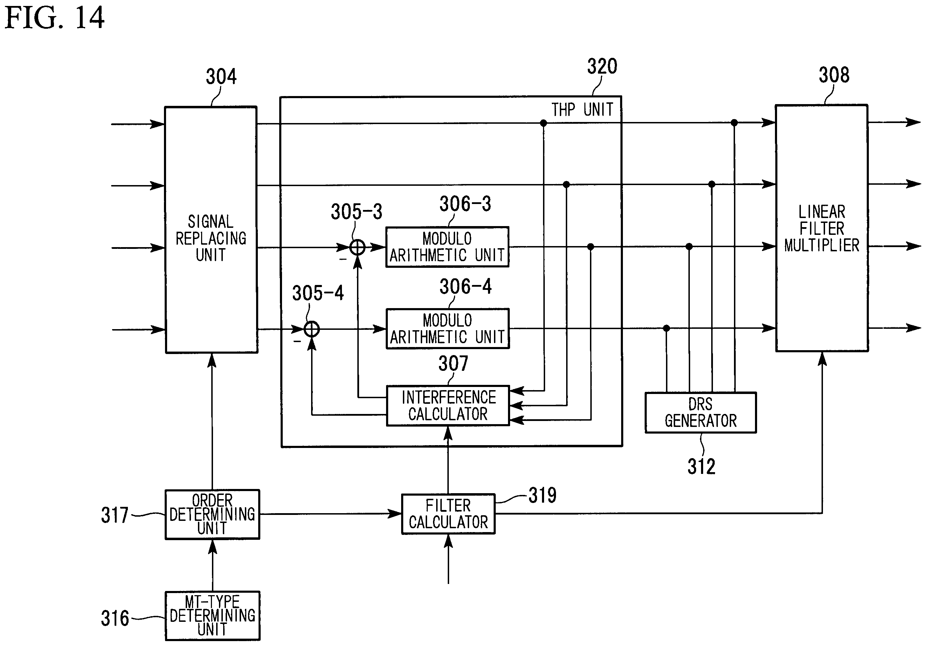

FIG. 14 is a schematic block diagram illustrating a configuration of a primary transmission part of the base station device 13. A configuration including the other reception part is the same as that of the first embodiment.

The primary transmission part of the base station device 13 includes: a signal replacing unit 304; an interference subtractors 305-3 and 305-4; modulo arithmetic units 306-3 and 306-4; an interference calculator 307; a linear filter multiplier 308; an MT-type determining unit 316; an order determining unit 317; a filter calculator 319; and a DRS generator 312. The interference subtractors 305-3 and 305-4, the modulo arithmetic units 306-3 and 306-4, and interference calculator 307 constitute a THP unit 320.

Four data signals encoded and modulated are given to the signal replacing unit 304. These information data signals are sorted by the signal replacing unit 304, and two information data signals thereof addressed to the non-THP-compliant mobile station device 23-1 are output to the linear filter multiplier 308 without being processed by the THP unit 320. The other two information data signals addressed to the THP-compliant mobile station device 23-2 are given to the linear filter multiplier 308 after being subjected to interference subtraction by the interference subtractors 305-3 and 305-4 of the THP unit 320 and to modulo arithmetic by the modulo arithmetic units 306-3 and 306-4.

In addition to the signals output from the THP unit 320, dedicated reference symbols DRS output from the DRS generator 312 are input to the linear filter multiplier 308. These two-types of signals are time-division-multiplexed and thereafter are subjected to a filtering process. This filtering process will be explained later together with an interference cancelling. The signals output from the linear filter multiplier 308 are given to the frame constructor 109 as explained in the first embodiment.

The MT-type determining unit 316 generates MT-type information of the mobile station devices 23-1 and 23-2, and gives the generated information to the order determining unit 317.

Based on the MT-type information, the order determining unit 317 generates a signal relating to order information defining the aforementioned order of the information data signals 101-1, ..., 101-4, and gives the generated signal to the signal replacing unit 304 and the filter calculating unit 319.

The filter calculating unit 319 generates interference information based on the signal relating to the channel information received from the channel information acquirer 118 explained in the first embodiment and the order information received from the order determining unit 317. Then, the filter calculating unit 319 gives the generated signal to the interference calculator 307.

Then, the detailed configuration of the THP unit 320 and the linear filter multiplier 308 are explained here.

A weighting filter P of the linear filter multiplier 308 can be expressed by the following formula (18).

[Formula 3]

$$\mathbf{P} = \left[ \mathbf{V}_1^{\mathrm{Im}}, \hat{\mathbf{V}}_2^{\mathrm{ker}} \mathbf{V}_2^{\mathrm{Im}} \right] \qquad (18)$$

As will be clarified later, the above formula (18) can be expressed by the following formula (19).

[Formula 4]

$$\mathbf{P} = \left[ \mathbf{V}_1^{\mathrm{Im}}, \hat{\mathbf{V}}_2^{\mathrm{ker}} \mathbf{V}_2^{\mathrm{Im}} \right] = \begin{bmatrix} V_{1,11}^* & V_{1,21}^* & \hat{V}_{2,31}^* V_{2,11}^* + \hat{V}_{2,41}^* V_{2,12}^* & \hat{V}_{2,31}^* V_{2,21}^* + \hat{V}_{2,41}^* V_{2,22}^* \\ V_{1,12}^* & V_{1,22}^* & \hat{V}_{2,32}^* V_{2,11}^* + \hat{V}_{2,42}^* V_{2,12}^* & \hat{V}_{2,32}^* V_{2,21}^* + \hat{V}_{2,42}^* V_{2,22}^* \\ V_{1,13}^* & V_{1,23}^* & \hat{V}_{2,33}^* V_{2,11}^* + \hat{V}_{2,43}^* V_{2,12}^* & \hat{V}_{2,33}^* V_{2,21}^* + \hat{V}_{2,43}^* V_{2,22}^* \\ V_{1,14}^* & V_{1,24}^* & \hat{V}_{2,34}^* V_{2,11}^* + \hat{V}_{2,44}^* V_{2,12}^* & \hat{V}_{2,34}^* V_{2,21}^* + \hat{V}_{2,44}^* V_{2,22}^* \end{bmatrix} \qquad (19)$$

Referring back to the formula (18), the second matrix in a parenthesis of the right-side matrix is explained as follows. In other words, when complex gains of the channels from the transmission antennas 312-1, ..., 312-4 of the base station device 13 to the non-THP-compliant mobile station device 23-1 and the THP-compliant mobile station device 23-2 are denoted as $2\times4$ matrices $H_1$ and $H_2$, respectively, the entire channel matrix H can be expressed by the following formula (20).

[Formula 88]

$$\mathbf{H} = \begin{bmatrix} \mathbf{H}_1 \\ \mathbf{H}_2 \end{bmatrix} = \begin{bmatrix} H_{11} & H_{12} & H_{13} & H_{14} \\ H_{21} & H_{22} & H_{23} & H_{24} \\ H_{31} & H_{32} & H_{33} & H_{34} \\ H_{41} & H_{42} & H_{43} & H_{44} \end{bmatrix} \qquad (20)$$

Next, singular value decomposition is performed on $H_1$. Then, $H_1$ can be expressed by the following formula (21). Here, in order to maintain consistency with a case where the number of MTs is three or more as will be explained later, $H_1$ is replaced with a symbol $H_{\wedge 2}$. $H_{\wedge 2}$ means a matrix obtained by removing $H_2$ from the entire channel matrix H. In a case where the number of MTs is only two, $H_1 = H_{\wedge 2}$.

[Formula 6]

$$\hat{\mathbf{H}}_2 = \begin{bmatrix} \hat{U}_{2,11} & \hat{U}_{2,12} \\ \hat{U}_{2,21} & \hat{U}_{2,22} \end{bmatrix} \begin{bmatrix} \hat{\varSigma}_{2,1} & 0 & 0 & 0 \\ 0 & \hat{\varSigma}_{2,2} & 0 & 0 \end{bmatrix} \begin{bmatrix} \hat{V}_{2,11} & \hat{V}_{2,12} & \hat{V}_{2,13} & \hat{V}_{2,14} \\ \hat{V}_{2,21} & \hat{V}_{2,22} & \hat{V}_{2,23} & \hat{V}_{2,24} \\ \hat{V}_{2,31} & \hat{V}_{2,32} & \hat{V}_{2,33} & \hat{V}_{2,34} \\ \hat{V}_{2,41} & \hat{V}_{2,42} & \hat{V}_{2,43} & \hat{V}_{2,44} \end{bmatrix} \quad (21)$$

Here, the first and third right-side matrices counted from the left are unitary matrices. Additionally, regarding the second matrix, only an element in the first row and first column and an element in the second row and the second column are positive real numbers. An Hermitian conjugate of a matrix including the third and fourth rows of the third matrix is the desired matrix $V_\wedge{}^{ker}{}_2$.

[Formula 7]

$$\hat{\mathbf{V}}_2^{ker} = \begin{bmatrix} \hat{V}_{2,31} & \hat{V}_{2,32} & \hat{V}_{2,33} & \hat{V}_{2,34} \\ \hat{V}_{2,41} & \hat{V}_{2,42} & \hat{V}_{2,43} & \hat{V}_{2,44} \end{bmatrix}^H \quad (22)$$

Here, if the signal addressed to the THP-compliant mobile station device 23-2 is multiplied by the linear filter $V_\wedge{}^{ker}{}_2$, it is possible to prevent the signal addressed to the mobile station device 23-2 from reaching the non-THP-compliant mobile station device 23-1 as interference.

A matrix $V^{lm}{}_2$ indicates an individual filter for the THP-compliant mobile station device 23-2. The matrix $V^{lm}{}_2$ can be obtained by performing a singular value decomposition again on the result ($H_2 V_\wedge{}^{ker}{}_2$) of multiplying the channel $H_2$ addressed to the mobile station device 23-2 by the above matrix $V_\wedge{}^{ker}{}_2$, as shown in the following formula (23). $H_2 V_\wedge{}^{ker}{}_2$ is a 2x2 matrix, and therefore the result of the singular value decomposition can be as follows.

[Formula 8]

$$\mathbf{H}_2\hat{\mathbf{V}}_2^{ker} = \begin{bmatrix} U_{2,11} & U_{2,12} \\ U_{2,21} & U_{2,22} \end{bmatrix} \begin{bmatrix} \varSigma_{2,1} & 0 \\ 0 & \varSigma_{2,2} \end{bmatrix} \begin{bmatrix} V_{2,11} & V_{2,12} \\ V_{2,21} & V_{2,22} \end{bmatrix} \quad (23)$$

An Hermitian conjugate of the rightmost matrix in the right-side of the formula (23) is set to be $V^{lm}{}_2$.

Additionally, regarding the signal addressed to the mobile station device 23-1, $H_1$ is subjected to a singular value decomposition to obtain an MT individual filter.

[Formula 9]

$$\mathbf{H}_1 = \begin{bmatrix} U_{1,11} & U_{1,12} \\ U_{1,21} & U_{1,22} \end{bmatrix} \begin{bmatrix} \varSigma_{1,1} & 0 \\ 0 & \varSigma_{1,2} \end{bmatrix} \begin{bmatrix} V_{1,11} & V_{1,12} & V_{1,13} & V_{1,14} \\ V_{1,21} & V_{1,22} & V_{1,23} & V_{1,24} \end{bmatrix} \quad (24)$$

An Hermitian conjugate of the rightmost matrix in the right-side of the formula (24) is set to be $V^{lm}{}_1$. Referring back, the matrix P in the formula (19) corresponds to the matrix Q of the first embodiment. The filter calculator 319 outputs a signal corresponding to this matrix Q to the linear filter multiplier 308.

The interference subtractors 305-3 and 305-4 of THP unit 320 are configured to be as follows.

An equivalent channel HP is defined as follows.

[Formula 10]

$$\mathbf{HP} = \mathbf{T} = \begin{bmatrix} \mathbf{T}_{11} & 0 \\ \mathbf{T}_{21} & \mathbf{T}_{22} \end{bmatrix} \quad (25)$$

Here, $T_{11}$, $T_{21}$, and $T_{22}$ are 2x2 matrices. The matrices $T_{11}$ and $T_{21}$ indicate channel states in case that signals transmitted from the base station device 13 toward the mobile station devices 23-1 and 23-2 respectively reach the proper mobile station devices. Additionally, the matrix $T_{21}$ indicates a channel state in case that a signal transmitted from the base station device 13 toward the non-THP-compliant mobile station device 23-1 reaches the THP-compliant mobile station device 23-2 as interference. The fact that a matrix in the first row and the second column in the right side of the formula (25) is 0 indicates that a signal addressed to the mobile station device 23-2 does not reach the mobile station device 23-1 as interference.

An interference coefficient filter is calculated using that matrix T of the equivalent channel. Here, if only a channel for a desired signal is extracted, the channel can be expressed by the following.
[Formula 11]

$$\mathbf{B} = \begin{bmatrix} \mathbf{T}_{11} & 0 \\ 0 & \mathbf{T}_{22} \end{bmatrix} \qquad (26)$$

This matrix B corresponds to the matrix A of the first embodiment expanded to the case of the multiple reception antennas of the second embodiment. It is necessary to multiply an inverse matrix of B to compensate the channel. Along with this, interference elements are calculated as follows.
[Formula 12]

$$\mathbf{B}^{-1}\mathbf{T} - \mathbf{I} = \begin{bmatrix} 0 & 0 \\ \mathbf{T}_{22}^{-1}\mathbf{T}_{21} & 0 \end{bmatrix} \qquad (27)$$

The reason that the unit matrix I is subtracted in the left side of the formula (27) is to cancel the elements with respect to the desired signal.

Thus, the interference coefficient information $B^{-1}T\text{-}I$ and the linear filter P can be calculated. The configurations of the modulo arithmetic units 306-3 and 306-4 are the same as those of the first embodiment.

Hereinafter, operation of the filter calculator 319 of the second embodiment is explained while generalizing the operation to a case where there are N mobile station devices each including M antennas. In this case, the base station includes MN antennas each transmitting a stream on which an individual information data signal is superimposed.

Complex gains of channels from each transmission antenna of the base station device to the reception antennas of the k-th mobile station device are expressed by an $M \times MN$ matrix $H_k$. Here, k denotes the number allocated to the mobile station device after the aforementioned ordering process. In other words, channel complex gain for the non-THP-compliant mobile station device is set to be $H_1$, and complex gains for the THP-compliant mobile station devices are set to be $H_2, ..., H_N$. The entire channel matrix H can be expressed by the following formula (28).
[Formula 13]

$$\mathbf{H} = [\mathbf{H}_1^t, \mathbf{H}_2^t, \cdots\cdots, \mathbf{H}_N^t]^t \qquad (28)$$

Now, a matrix obtained by extracting the first to (k-1)-th channels from this channel matrix is denoted as the following.
[Formula 14]

$$\hat{\mathbf{H}}_k = [\mathbf{H}_1^t, \mathbf{H}_2^t, \cdots\cdots, \mathbf{H}_{k-1}^t]^t \qquad (29)$$

This matrix $H_{\wedge k}$ is an $M(k-1) \times MN$ matrix. Next, a singular value decomposition is performed on $H_{\wedge k}$.
[Formula 15]

$$\hat{\mathbf{H}}_k = \hat{\mathbf{U}}_k^H \hat{\boldsymbol{\Sigma}}_k \left[ \hat{\mathbf{V}}_k^{\mathrm{Im}}, \hat{\mathbf{V}}_k^{\mathrm{ker}} \right]^H \qquad (30)$$

Here, the matrix $V_{\wedge}{}^{\mathrm{Im}}{}_k$ is an $MN \times M(k-1)$ matrix. The matrix $V_{\wedge}{}^{\mathrm{ker}}{}_k$ is an $MN \times M(N-k+1)$ matrix.

Next, an optimal precoding is performed on each of M signals addressed to each MT. The result $(H_k V_{\wedge}{}^{\mathrm{ker}}{}_k)$ of

multiplying the channel $H_k$ corresponding to the k-th MT by the matrix $V_\wedge{}^{ker}{}_k$ calculated in the formula (30) is subjected to a singular value decomposition again.

[Formula 16]

$$\mathbf{H}_k \hat{\mathbf{V}}_k^{ker} = \mathbf{U}_k^{H} \Sigma_k \left[ \mathbf{V}_k^{Im}, \mathbf{V}_k^{ker} \right]^{H} \qquad (31)$$

The matrix $H_k V_\wedge{}^{ker}{}_k$ is an $M \times M(N-k+1)$ matrix. For this reason, the rank of the matrix $H_k V_\wedge{}^{ker}{}_k$ is M at most.

[Formula 17]

$$\left[ \mathbf{V}_k^{Im}, \mathbf{V}_k^{ker} \right]$$

The first M columns of the above matrix are set to be individual filters $V^{Im}{}_k$ addressed to the mobile station devices. Additionally, the matrix $V^{Im}{}_k$ is an $M(N-k+1) \times M$ matrix.

Using the matrix $V_\wedge{}^{ker}{}_k$ and the matrix $V^{Im}{}_k$ (k=1, 2, ..., N) calculated above, a linear filter is set to be the following.

[Formula 18]

$$\mathbf{P} = \left[ \hat{\mathbf{V}}_1^{ker} \mathbf{V}_1^{Im}, \hat{\mathbf{V}}_2^{ker} \mathbf{V}_2^{Im}, ..., \hat{\mathbf{V}}_N^{ker} \mathbf{V}_N^{Im} \right] \qquad (32)$$

The matrix P corresponds to the matrix Q of the first embodiment. The linear filter calculator outputs this matrix P to the linear filter multiplier.

The equivalent channel HP is expressed as the following formula (33).

[Formula 19]

$$\mathbf{HP} = \mathbf{T} = \begin{bmatrix} \mathbf{T}_{11} & 0 & \cdots & 0 \\ \mathbf{T}_{21} & \mathbf{T}_{22} & \ddots & \vdots \\ \vdots & & \ddots & 0 \\ \mathbf{T}_{N1} & \cdots & & \mathbf{T}_{NN} \end{bmatrix} \qquad (33)$$

Here, the matrix $T_{ik}$ is an MxM matrix and is a channel matrix of a channel which a signal addressed to the k-th MT is assumed to pass in order to reach the i-th MT. The matrix $T_{ik}$ (i and k have the same value) indicates a channel in a case that a signal addressed to each mobile station device transmitted by the base station device reaches the proper mobile station device. The $T_{ik}$ (i and k are different values) indicates a channel in a case that signals addressed to different mobile station devices reach as interference. This equivalent channel is a lower triangular matrix.

Additionally, if only a channel for the desired signal is extracted, this matrix can be expressed by the following.

[Formula 20]

$$\mathbf{B} = \begin{bmatrix} \mathbf{T}_{11} & 0 & \cdots & 0 \\ 0 & \mathbf{T}_{22} & \ddots & \vdots \\ \vdots & & \ddots & 0 \\ 0 & \cdots & 0 & \mathbf{T}_{NN} \end{bmatrix} \qquad (34)$$

This corresponds to the matrix A of the first embodiment expanded to a case of multiple reception antennas. Similar to the first embodiment, in order to calculate a signal that can cancel interference to be received by the mobile station device after the desired signal passes the channel expressed by the above formula (34), an interference coefficient filter (interference information) is calculated by the following formula (35).

[Formula 21]

$$\mathbf{B^{-1}T - I} = \begin{bmatrix} 0 & 0 & \cdots & 0 \\ \mathbf{T_{22}^{-1}T_{21}} & 0 & \ddots & \vdots \\ \vdots & \ddots & \ddots & 0 \\ \mathbf{T_{NN}^{-1}T_{N1}} & \cdots & \mathbf{T_{NN}^{-1}T_{N(N-1)}} & 0 \end{bmatrix} \qquad (35)$$

The interference coefficient filter calculated in the above manner is output to the interference calculator.

Similar to the first embodiment, the THP unit 320 includes: an interference calculator, an interference subtractor, and an modulo arithmetic unit. The THP unit 320 subtracts an interference signal on the equivalent channel from the desired signal addressed to the second or subsequent mobile station device excluding the first mobile station device. The THP unit 320 sequentially repeats operation of performing modulo arithmetic to calculate the signal addressed to all the mobile station devices. The difference from the first embodiment is in that this sequential interference cancelling is performed in units of users, i.e., for each of the M signal streams.

Each step of the operation by the THP unit 320 is similar to that shown in FIG. 6. However, N signals $s_k$ (k=1, ..., N) to be input to the THP unit 320 are all M-dimensional column vectors. N signals $f_k$ (k=1, ..., N) to be output from the THP unit 320 are all the M-dimensional column vectors. Additionally, along with the process being performed for each of the M signal streams, the calculation formula for the interference signal $f_k$ used by the interference calculator is set to be the following.

$$f_k = (B^{-1}T - I)(v_1^t, v_2^t, ..., v_k^t, 0, ..., 0)^t \qquad (36)$$

Further, the process for the interference subtractor and the modulo calculator is expressed by the following.

$$v_k = Mod_t(s_k - f_k) \qquad (37)$$

[Configuration of Mobile Station Device]

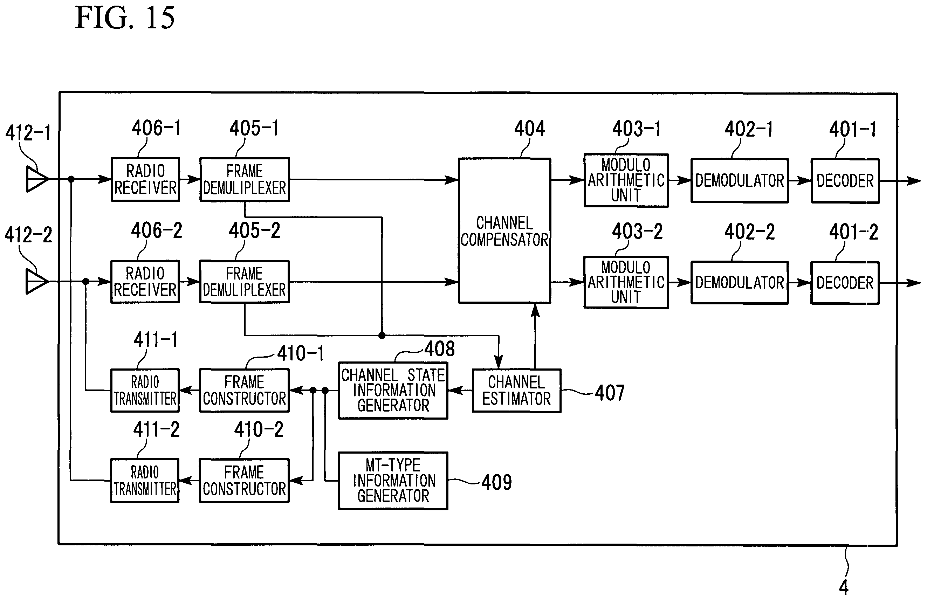

FIG. 15 is a schematic block diagram illustrating a configuration of a THP-compliant mobile station device 23-2.

The mobile station device 23-2 includes: decoders 401-1 and 401-2; demodulators 402-1 and 402-2; modulo arithmetic units 403-1 and 403-2; a channel compensator 404; frame demultiplexers 405-1 and 405-2; radio receivers 406-1 and 406-2; a channel estimator 407; a channel state information generator 408; an MT-type information generator 409; frame constructors 410-1 and 410-2; radio transmitters 411-1 and 411-2; and antenna units 412-1 and 412-2. The constituent units (indicated by 401-1, 401-2, 402-1, 402-2, 403-1, 403-2, 404, 405-1, 405-2, 406-1, 406-2, 407, 408, 409, 410-1, 410-2, 411-1, and 411-2) other than the antenna units 412-1 and 412-2 constitute a processor unit 4.

The antenna units 412-1 and 412-2 receive radio signals transmitted by the base station device 13 and transfer these signals to the radio receivers 406-1 and 406-2, respectively. The radio receivers 406-1 and 406-2 downconvert those radio frequency band signals into baseband signals, perform analog-to-digital conversion, and output the resultant signals to the frame demultiplexers 405-1 and 405-2, respectively. The frame demultiplexers 405-1 and 405-2 demultiplex data signals from dedicated reference symbols DRS and common reference symbols CRS that are pilot signals, and output the information data signals to the channel compensator 404. Meanwhile, the frame demultiplexers 405-1 and 405-2 output the dedicated reference symbols DRS and the common reference symbols CRS to the channel estimator 407.

The channel estimator 407 outputs to the channel state information generator 408, the channel state information $H_k$ estimated based on the common reference symbols CRS. Additionally, the channel estimator 407 outputs to the channel compensator 404, the complex gain $T_{kk}$ of the equivalent channel estimated by performing channel estimation based on the dedicated reference symbols DRS. Here, channel compensation means multiplying a reception signal y by a ZF (Zero Forcing) filter $T_{kk}^{-1}$ with respect to the equivalent channel. The signal output from the channel compensator is $T_{kk}^{-1}y$. This output signal is output to the modulo arithmetic units 403-1 and 403-2. Here, an MMSE filter may be used in lieu of the ZF filter.

The modulo arithmetic units 403-1 and 403-2 perform modulo arithmetic, as performed in the first embodiment, on the reception signals received from the channel compensator. Then, the modulo arithmetic units 403-1 and 403-2 output signals subjected to the modulo arithmetic to the demodulators 402-1 and 402-2. The demodulators 402-1 and 402-2 demodulate the signals subjected to the modulo arithmetic which are received from the modulo arithmetic units 403-1 and 403-2. Then, the demodulators 402-1 and 402-2 output the demodulation signals to the decoders 40-1 and 401-2. The decoders 401-1 and 402-2 decode the signals received from the demodulators 402-1 and 402-2, and output data signals .

The MT-type information generator 409 inputs to the frame constructors 410-1 and 410-2, MT-type information (i.e., a signal indicating that the mobile station devices are THP-compliant mobile station devices). The channel state information generator 408 inputs to the frame constructor, the channel state information ($H_k$) received from the channel estimator upon receipt of CRS. The frame constructors construct frames using the input MT-type information and the input channel state information, and output the constructed frames to the radio transmitters 411-1 and 411-2. The radio transmitters 411-1 and 411-2 perform digital-to-analog conversion on the input signals, perform upconversion, and transmit the resultant signals to the transmission device 13 via the antennas 412-1 and 412-2.

A configuration of the non-THP-compliant mobile station device 23-1 is equal to the configuration of the THP-compliant mobile station device 23-2 from which the modulo arithmetic units 403-1 and 403-2 are removed. Therefore, explanations thereof are omitted here.

As long as the base station can recognize the type of each mobile station device, which is THP-compliant or non-THP-compliant, MT-type information associated to one type of THP-compliant or non-THP-compliant terminals may be transmitted. This is because the base station may determine, as the other type, the mobile station device from which the MT-type information is not transmitted. Additionally, information indicating the number of generations may be transmitted.

In the second embodiment, even in a case that one mobile station device performs communication using multiple streams, it is possible to perform communication using MU-MIMO THP in a state where a non-THP-compliant mobile station device and a THP-compliant mobile station device are mixed.

<Modified Example 1>

The case of a single-carrier has been explained in the second embodiment. However, the invention of the second embodiment may be applied to multicarrier, for each subcarrier using OFDM or the like. In other words, similar to the modified example of the first embodiment, an OFDM signal modulator and an OFDM signal demodulator may be newly added for each data signal streams. For example, in a case that N mobile station devices each including M reception antennas are multiplexed, a base station device includes a pair of the OFDM signal modulator and the OFDM signal demodulator for each of MN signal streams. Additionally, each mobile station device includes M pairs of the OFDM signal modulator and the OFDM signal demodulator.

Regarding the processor unit 4 of the mobile station device 23-2, multiple constitutional units of the processor 4 may be implemented by a semiconductor device and a program. That program may be stored in a ROM, a PROM, or a flash memory. A control device that controls the memory may also be implemented by a semiconductor device. These semiconductor devices may be constituted by one or multiple semiconductor chips.

Additionally, only the modulo arithmetic units 403-1 and 403-2 and the MT-type information generator 409 may constitute a processor. These multiple units may by constituted by single ore multiple semiconductor chips.

<Third Embodiment>

Next, a third embodiment of the present invention is explained hereinafter.

In the third embodiment of the present invention, one base station device 14 and N mobile station devices 24 are provided. Here, N is an integer that is 2 or greater. The base station device 14 includes N antennas. The mobile station device 24 includes one antenna. The base station device 14 transmits spatially-divided N streams on which different data signals are superimposed. The mobile station device 24 receives these streams. Additionally, the base station device 14 can communicate with mobile station devices which are all non-THP-compliant in some cases, and can simultaneously communicate, by spatially multiplexing, with mobile station devices which are all THP-compliant in other cases.

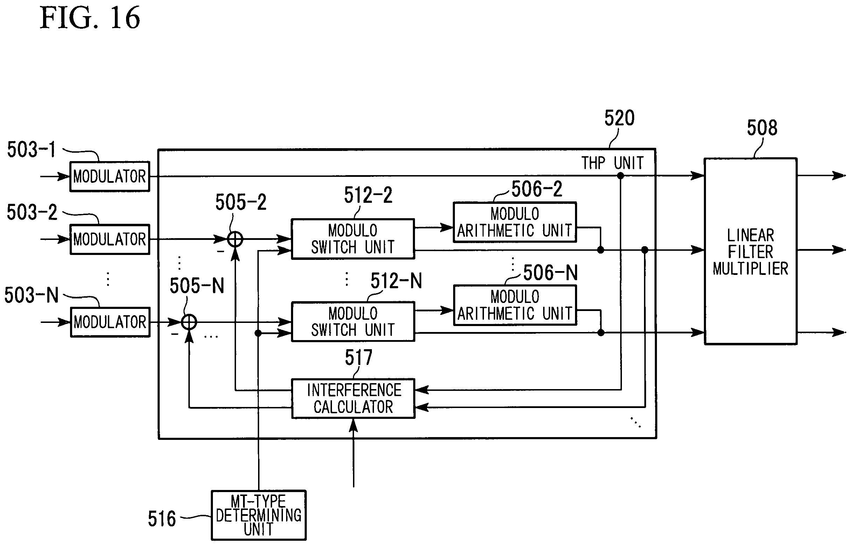

FIG. 16 is a schematic block diagram illustrating a configuration of a primary transmission part of the base station device 14. The primary transmission part of the base station device 14 includes: modulators 503-1, 503-2, ..., 503-N; interference subtractors 505-2, ..., 505-N; modulo arithmetic units 506-2, ..., 506-N; a linear filter multiplier 508; modulo switch units 512-2, ..., 512-N; an MT-type determining unit 516; and an interference calculator 517. The interference subtractors 505-2, ..., 505-N, the modulo arithmetic units 506-2, ..., 506-N, the modulo switch units 512-2, ..., 512-N, and the interference calculator 519 constitute a THP unit 520.

A configuration including the other reception part is the same as that of the first embodiment. However, the signal replacing unit 104 and the order determining unit 117 of the first embodiment are not included. Additionally, operations of: the modulators 503-1, 503-2, ..., 503-N; the interference subtractors 505-2, ..., 505-N; the modulo calculators 506-1, ..., 506-N; the linear filter multiplier 508; and the interference calculator 519 are the same as those of the first embodiment.

The MT-type determining unit 516 controls, by its output signals, the modulo switch units 512-2 ..., 512-N. If the signals output from the interference subtractors 501-2, ..., 501-N are addressed to the THP-compliant mobile station devices, the MT-type determining unit 516 outputs the signals to the modulo arithmetic units 506-2, ..., 506-N. If the signals output from the interference subtractors 501-2, ..., 501-N are addressed to the non-THP-compliant mobile station devices, the MT-type determining unit 516 bypasses the modulo calculators 506-2, ..., 506-N, and outputs the signals to the linear filter multiplier 508. Here, the signal output from the modulator 503-1 may be addressed to either a non-THP-compliant mobile station device or a THP-compliant mobile station device. In this case, the THP-compliant mobile station device performs modulo arithmetic on a reception signal.

According to the third embodiment, an increase in transmission power is unavoidable, the base station device 13 can even communicate mobile station devices 24 that are non-THP-compliant.

Regardless of whether the mobile station device is THP-compliant or non-THP-compliant, the configuration of the mobile station device of the first embodiment can be used.

In the third embodiment, spatial-multiplexing can be performed even if multiple non-THP-compliant mobile station devices are included.

<Modified Example 1>

In the present modified example, the signal replacing unit 104 and the order determining unit 117 of the first embodiment which are shown in FIG. 2 are added to the configuration of the base station device shown in FIG. 16. In other words, outputs of the modulators 503-1, ..., 503-N are given to the THP unit 520 through the signal replacing unit. Further, data signals addressed to the non-THP-compliant mobile stations device are output to output terminals of the signal replacing unit which are allocated with the smaller numbers. Thereby, it is possible to suppress an increase in the transmission power caused by not performing modulo arithmetic. In other words, the first signal is not subjected to interference in the equivalent channel $R^H$. Additionally, the second signal is interfered only by the first signal. Further, the third signal is interfered only by the first and second signals. Likewise, the (k+1)-th signal is interfered by the first to k-th signals. This indicates that the more preceding signal is averagely interfered only by less signals. In other words, this indicates that as the order of the signal is earlier, a deterioration further decreases, the deterioration being caused by not performing modulo arithmetic for suppressing the signal within a predetermine amplitude range. Therefore, non-THP-compliant mobile station devices that do not perform modulo arithmetic are sequentially arranged from the first, thereby suppressing an increase in power.

<Modified Example 2>

Only a kxk matrix corresponding to the first to k-th rows and the first to k-th columns is extracted with respect to the equivalent channel $R^H$ and is denoted as a matrix $R_S$. Then, signals $(v_1, ..., v_k)^t$ addressed to the first to k-th mobile station devices before the linear filter multiplier 508 performs multiplication are multiplied by an inverse matrix of the matrix $R_S$. Then, the matrix resulted from the multiplication is input to the linear filter multiplier 508. In such a case, if only the signals addressed to the first to k-th MTs are focused, the signals addressed to the first to k-th mobile station devices are transmitted using so called beamforming. Additionally, the base station device inputs these signals $(v_1, ..., v_k)^t$ to the interference calculator, and thereby can calculate interference that the first to k-th signals cause to the (k+1)-th and subsequent THP-compliant mobile station devices. Thereby, signals addressed to the (k+1)-th and subsequent THP-compliant mobile station devices can be multiplexed by being added to the signals to be subjected to beamforming.

<Modified Example 3>

The third embodiment and its modified examples 1 and 2 have been explained with respect to the case of a single carrier. However, the present embodiment may be applied to multicarrier, especially to OFDM for each subcarrier. In this case, the OFDM signal modulator 1211 and the OFDM demodulator 217 of the modified example of the first embodiment may be newly added.

<Fourth Embodiment>

In the fourth embodiment, one base station device 15 and N mobile station deices 25 are provided. Here, N is an integer that is 2 or greater. Further, the base station device 15 includes 2N antennas. Each of the mobile station devices 25 includes two antennas. The base station device 15 transmits spatially-divided 2N streams on which different data signals are superimposed. Each of the mobile station devices 25 receives these two streams. Additionally, the base station device 15 can communicate with mobile station devices all of which are non-THP-compliant in some case, and can simultaneously communicate, by spatial multiplexing, with mobile station devices all of which are THP-compliant in another case.

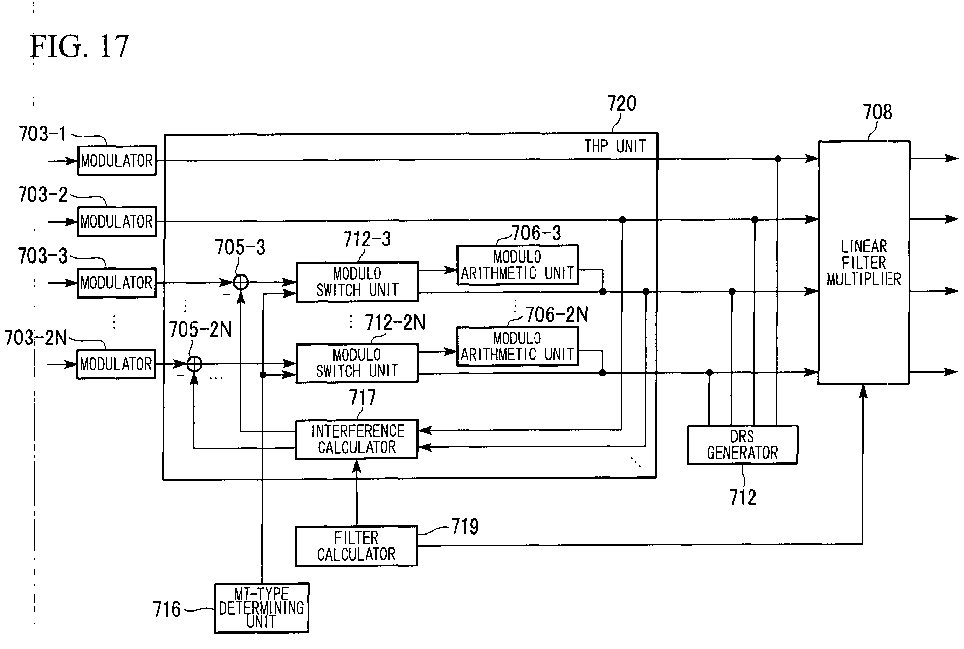

FIG. 17 is a schematic block diagram illustrating a configuration of a primary transmission part of the base station device 15. The primary transmission part of the base station device 15 includes: modulators 703-1, 703-2, 703-3, ..., 703-2N; interference subtractors 705-3, ..., 705-N; modulo arithmetic units 706-3, ..., 706-N; modulo switch units 712-3, ..., 712-N; an interference calculator 717; a linear interference filter multiplier 705; a DRS generator 712; an MT-type determining unit 716; and a filter calculator 719. The interference subtractors 705-3, ..., 705-2N, the modulo arithmetic units 706-3, ..., 706-2N, the modulo switch units 712-3, ..., 712-2N, and the interference calculator 717 constitute a THP unit 720. However, the signal replacing unit 304 and the order determining unit 317 are not included. A configuration including the other reception part is the same as that of the second embodiment.

The MT-type determining unit 716 controls, by its output signals, the modulo switch units 712-3, ..., 712-2N. If the signals output from the interference subtractors 705-3, ..., 705-2N are addressed to the THP-compliant mobile station devices, the MT-type determining unit 516 outputs the signals to the corresponding modulo arithmetic units 706-3, ..., 706-2N. If the signals output from the interference subtractors 705-3, ..., 705-N are addressed to the non-THP-compliant mobile station devices, the MT-type determining unit 716 bypasses the modulo calculators 706-3, ..., 706-N, and outputs the signals to the linear filter multiplier 708.

The signals output from the THP unit 720 as well as the signals output from the DRS generator 712 are given to the linear filter multiplier 708.

A process by the linear filter multiplier 708 is the same as that by the linear filter multiplier 308 of the second embodiment, and therefore explanations thereof are omitted here. Additionally, processes by the mobile station device are the same as those by the mobile station device of the second embodiment, and therefore explanations thereof are omitted here.

The fourth embodiment has been explained with an example where a case where two streams are transmitted to one mobile station device. However, even in a case where one mobile station device performs communication using three or more streams, multiple non-THP-compliant mobile station devices and THP-compliant mobile station devices can be multiplexed by MU-MIMO THP in a similar manner.

<Modified Example 1>

In the present modified example 1, similar to the modified example 1 of the third embodiment, the signal replacing unit and the order determining unit are added. Similar to the modified example 1 of the third embodiment, if there are k non-THP-compliant MTs, the order determining unit determines the order such that the non-THP-compliant MTs are allocated to the first to k-th numbers, and the THP-compliant MTs are allocated to the (k+1)-th and subsequent numbers. Here, based on the channel state information received from the channel information acquirer, the order determining unit determines the order of the (k+1)-th and subsequent mobile station devices with respect to the (k+1)-th and subsequent THP-compliant terminals.

Additionally, the order determining unit sorts the MT-type information received from the MT-type determining unit according to the determined order, and then outputs the sorted MT-type information to the modulo switch units.

<Modified Example 2>

The fourth embodiment and its modified example 1 have been explained with respect to the case of a single carrier. However, the present embodiment may be applied to multicarrier, especially to OFDM for each subcarrier. In this case, similar to the modified example 1 of the first embodiment, the OFDM signal modulator and the OFDM demodulator are newly added.

<Fifth Embodiment>

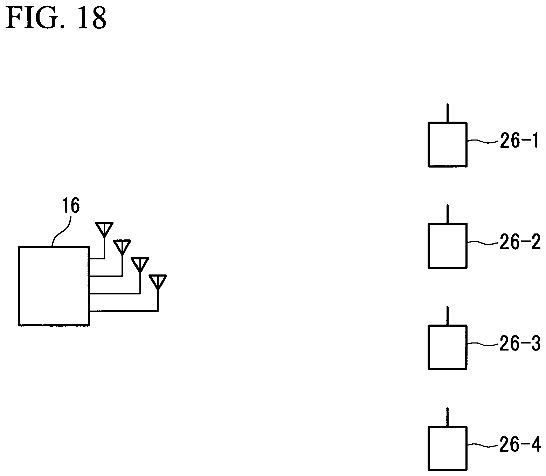

FIG. 18 is a schematic block diagram illustrating a communication system according to a fifth embodiment of the present invention. In this communication system, one base station device 16 wirelessly communicates with four mobile station divices 26-1, 26-2, 26-3. and 26-4. The base station device 16 includes four antennas. Each of the mobile station device 26 includes one antenna. The mobile station devices 26-1, 26-3, and 26-4 are mobile station devices that receive data signals added with perturbation vectors (i.e., subjected to a non-linear process). The mobile station device 26-2 is a mobile station device that receives a data signal not subjected to such a non-linear process.

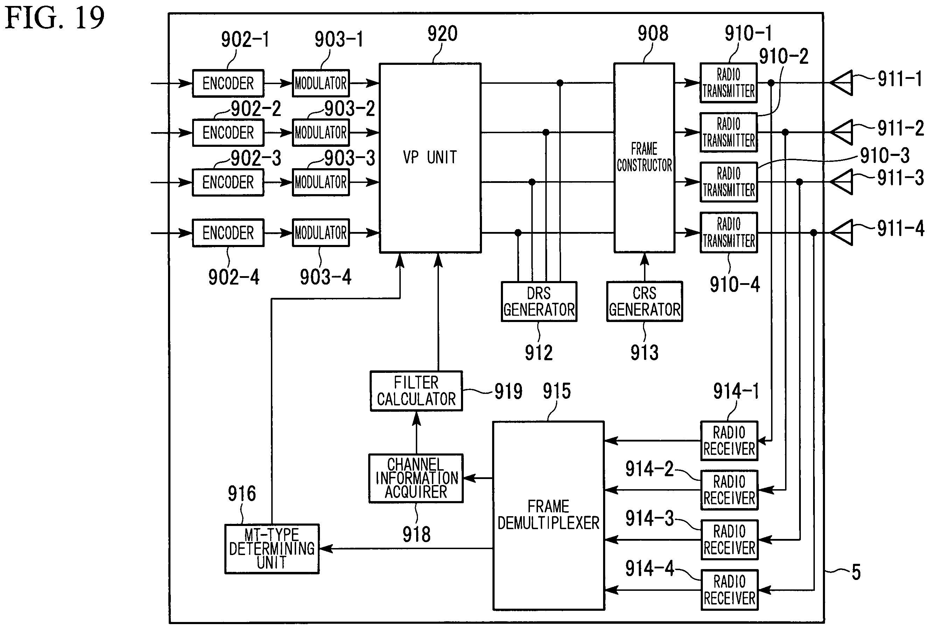

FIG. 19 is a block diagram illustrating a configuration of the base station device 16. The base station device 16 includes: encoders 902-1, 902-2, 902-3, and 902-4; modulators 903-1, 903-2, 903-3, and 903-4; a VP (Vector Perturbation) unit 920; a frame constructor 908; radio transmitters 910-1, 910-2, 910-3, and 910-4; antenna units 911-1, 911-2, 911-3, and 911-4; a DRS generator 912; a CRS generator 913; radio receivers 914-1, 914-2, 914-3, and 914-4; a frame demultiplexer 915; an MT-type determining unit 916; a channel information acquirer 918; and a filter calculator 919.

The constitutional units (902-1, 902-2, 902-3, 902-4, 903-1, 903-2, 903-3, 903-4, 920, 908, 910-1, 910-2, 910-3, 910-4, 911-1, 911-2, 911-3, 911-4, 912, 913, 914-1, 914-2, 914-3, 914-4, 915, 916, 918, and 919) excluding the antenna units 911-1, 911-2, 911-3, and 911-4 constitute a processor 5.

Data signals 901-1, 901-2, 901-3, and 901-4 addressed to the mobiles station devices 26 are subjected to error correction coding by the encoders 902-1, 902-2, 902-3, and 902-4, and thereafter are modulated by the modulators 903-1, 903-2, 903-3, and 903-4, respectively. The signals output from the modulators 903-1, 903-2, 903-3, and 903-4 are given to the VP unit 920.

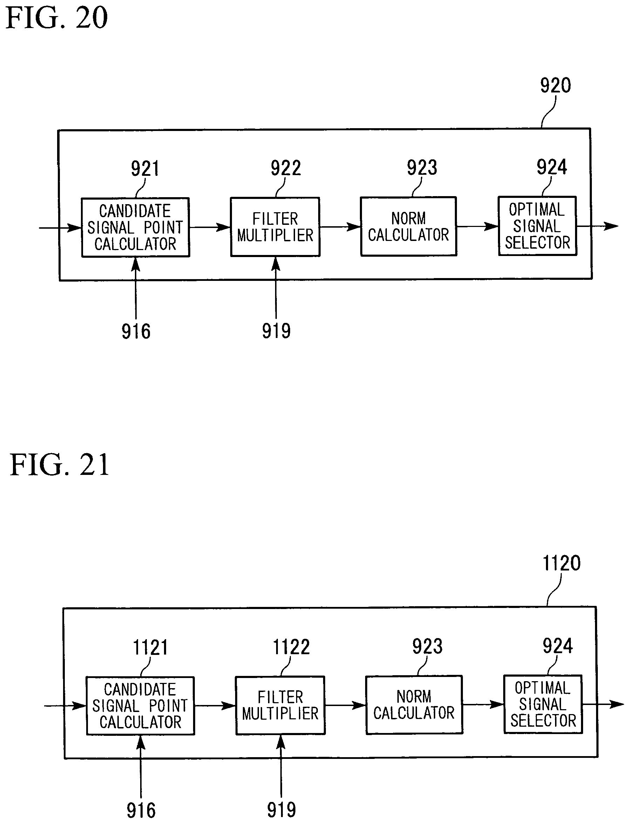

FIG. 20 is a block diagram illustrating the details of the VP unit 920. The VP unit 920 includes: a candidate signal point calculator 921; a filter multiplier 922; a norm calculator 923; and an optimal signal selector 924.

A process by the candidate signal point calculator 921 shown in FIG. 20 is explained first. Four data signals 901-1, 901-2, 901-3, and 901-4 are denoted as s ($=(s_1, s_2, s_3, s_4)^t$) as desired signals, s is a vector expressed by four complex numbers. Here, a perturbation vector is denoted as $Z\tau$ using a four-dimensional complex vector Z having real and imaginary parts both of which are integers. Here, $\tau$ denotes the modulo width. Then, the perturbation vector is a signal that is an integral multiple of the modulo width $\tau$.

Here, elements of the complex vector Z to be added to data signals addressed to the THP-compliant mobile station devices 26-1, 26-3, and 26-4 are denoted as $Z_1$, $Z_3$, and $Z_4$. For an explanation purpose, explanations are given hereinafter assuming that the mobile station device 26-2 is non-THP-compliant. In this case, a perturbation vector is not added to a data signal addressed to the non-THP-compliant mobile station device 26-2, and therefore $Z_2=0$. Under this condition, all possible combinations for the perturbation vector are calculated, each of the combinations is added to the desired signal s, and the results of the addition are output as candidate points to the filter multiplier 922. The candidate signal point x is expressed by the following.

$$x=s+Z\tau \qquad (38)$$

The candidate point x is a grid point in an eight dimensional space. The filter multiplier 922 multiplies each of the candidate signal point received from the candidate signal point calculator by a linear filter $H^{-1}$ as shown by the following formula (39).

$$H^{-1}x= H^{-1}(s+Z\tau) \qquad (39)$$

Here, $H^{-1}$ is an inverse matrix of the channel matrix H for the channels among the base station device 16 and the mobile station devices 26.

The filter multiplier 922 inputs to the norm calculator 923, the constellation of the candidate points subjected to the filter multiplication.

Based on the constellation of the candidate points subjected to the filter multiplication, the norm calculator 923 calculates Euclidean norms $\|H^{-1}x\|^2$ for all the points $H^{-1}x$. The results are given to the optimal signal selector 924.

The optimal signal selector 924 selects one having the smallest value from the multiple Euclidean norms $\|H^{-1}x\|^2$. Then, the optimal signal selector 924 outputs, as x0, the value of x at that time of selection. This is the output of the VP unit 920 shown in FIG. 20. Finally, the VP unit 920 outputs to the frame constructor 908, x0 as the signal added with the perturbation vector. The frame constructor 908 time-multiplexes the dedicated reference symbol DRS with the received data signal x0.

This time-multiplexed signal is further time-multiplexed with the common reference symbol CRS, and the transmission signal $H^{-1}x_0$ multiplied by the inverse matrix $H^{-1}$ of the channel matrix H. Then, the results of the time multiplexing are given to the radio transmitters 910-1, 910-2, 910-3, and 910-4, which perform digital-to-analog conversion, and upconversion into radio frequency signals. The outputs of the radio transmitters 910-1, 910-2, 910-3, and 910-4 are transmitted to the mobile station devices 26-1, 26-2, 26-3, and 26-4 via the antenna units 911-1, 911-2, 911-3, and 911-4.

On the other hand, the antenna units 911-1, 911-2, 911-3, and 911-4 give to the radio receivers 914-1, 914-2, 914-3, and 914-4, radio signals received from the mobile station devices 26-1, 26-2, 26-3, and 26-4. The radio receivers 914-1, 914-2, 914-3, and 914-4 downconvert the radio signals received from the antenna units 911-1, 911-2, 911-3, and 911-4 into baseband signals. Then, the radio receivers 914-1, 914-2, 914-3, and 914-4 perform analog-to-digital conversion and then give its output signals to the frame demultiplexer 915.

The frame demultiplexer 915 performs the following frame demultiplexing on the signals received from the radio receivers 914-1, 914-2, 914-3, and 914-4. In other words, the frame demultiplexer 915 gives a signal relating to channel state information to the channel information acquirer 918. Meanwhile, the frame demultiplexer 915 gives to the MT-type determining unit 916, a signal relating to the MT-types of the mobile station devices 26, which are THP-compliant or non-THP-compliant. Other than those, the frame demultiplexer 915 outputs to an external unit (not shown in FIG. 19), data signals from the mobile station devices, which are demultiplexed by the frame demultiplexer 915.

The MT-type determining unit 916 generates MT-type information of the mobile station devices 26 and gives the generated MT-type information to the VP unit 920. The channel information acquirer 918 receives the signal relating to the channel state information H from the frame demultiplexer 915, and gives the received signal to the filter calculator 919. The filter calculator 919 generates a signal relating to an inverse matrix $H^{-1}$ of the channel information H received from the channel information acquirer 118. Then, the filter calculator 919 gives the generated signal to the VP unit 920.

The above operation is operation in a case that the number of MTs is four. However, even in a case that the number of mobile station devices is expanded to N that is greater than four, it would be easily understood that the transmission power can be reduced by adding a perturbation vector in a similar manner.

The configurations of the THP-compliant and non-THP-compliant mobile station devices MTs are similar to those of the first embodiment, and therefore explanations thereof are omitted here. However, aspects of reception can be explained as follows.

Firstly, transmission signals are expressed as $H^{-1}X_0 = H^{-1}(s + Z_0\tau)$. Reception signals, which pass on channels and are received by the respective MTs, are expressed as follows.

$$HH^{-1}X_0 = X_0 = HH^{-1}(s + Z_0\tau) \qquad (40)$$

Here, all signals are expressed as vectors. In actual cases, however, each element is received by a different MT. Additionally, noises are ignored. The THP-compliant MTs, after receiving signals, perform modulo arithmetic expressed by the aforementioned formula (10). Then, the result is the following.

$$\mathrm{Mod}(s + Z_0\tau) = s \qquad (41)$$

Thus, the perturbation vector is cancelled by the modulo arithmetic, and thereby the proper desired signal can be reconstructed. The non-THP-compliant mobile station device can directly obtain the reception signal s without performing the modulo arithmetic.

By the aforementioned method, it is possible to perform spatial-multiplexing even if the THP-compliant MT and multiple non-THP-compliant MTs are mixed.

In the fifth embodiment, $H^{-1}$ is used as the linear filter. This is referred to as a ZF filter. An MMSE (Minimum Mean Squared Error) method using $H'^H(H'H'^H + dI)^{-1}$ in lieu of $H^{-1}$ may be used. Here, d is a value obtained by dividing the power of noise received by the mobile station device by the power of transmission signals.

In the fifth embodiment, even in the case of MU-MIMO VP, it is possible to multiplex the multiple non-THP-compliant mobile station devices and the THP-compliant mobile station device.

<Modified Example>

Regarding the processor unit 5 of the base station device 16, multiple constitutional units of the processor unit 5 may be implemented by a semiconductor device and a program. That program may be stored in a ROM, a PROM, or a flash memory. A control device that controls the memory may also be implemented by a semiconductor device. These semiconductor devices may be constituted by one or multiple semiconductor chips.

Additionally, only the MT-type information generator 916 and the VP unit 920 may constitute a processor. These multiple units, or these multiple units added with other constituent units may be constituted by single ore multiple semiconductor chips, as explained above.

<Sixth Embodiment>

In a sixth embodiment of the present invention, one base station device 17 wirelessly communicates with N mobile station devices. Each of all the mobile station devices includes M antennas. The base station device 17 includes MN antennas. The base station device simultaneously spatially-multiplexes and transmits toward the mobile station devices, MN streams on which different data signals, for which the transmission power is reduced using a perturbation vector, are superimposed. Here, the mobile station devices include K non-THP-compliant mobile station deices and (N-K) THP-compliant mobile station devices.

FIG. 21 is a block diagram illustrating a configuration of a VP unit 1120 of the base station device 17. The VP unit 1120 includes: a candidate signal point calculator 1121; a filter multiplier 1122; a norm calculator 923; and an optimal signal selector 924. The norm calculator 923 and the optimal signal selector 924 are the same as those of the fifth embodiment. Additionally, configurations other than the VP unit 1120 of the base station device 16 are the same as those of the fifth embodiment.

Hereinafter, operations of the candidate signal point calculator 1121 and the filter multiplier 1122 included in the VP unit 1120 of the base station device 17 are explained.

Based on MT-type information, the candidate signal point calculator 1121 adds a perturbation vector for the number of dimensions with respect to the THP-compliant mobile station devices. At this time, the MT-type information is information relating to the N mobile station devices. On the other hand, M signals are transmitted to each mobile station device. For this reason, there are NM transmission signals to be spatially multiplexed at one time. Therefore, the candidate signal point calculator 1121 calculates candidate points to which the perturbation vector is added for the number of dimensions corresponding to the M(N-K) signals addressed to the THP-compliant mobile station devices. Similar to the formula (38), a constellation of the candidate signal points is expressed by the following.

$$x=s+Z\tau \tag{42}$$

Next, operation of the filter multiplier 1122 is explained here. A filter to be multiplied by this filter multiplier 1122 is one corresponding to the inverse matrix $H^{-1}$ of the channel matrix H of the fifth embodiment which is expanded to the case of multiple reception antennas. Firstly, a method of calculating the filter to be multiplied is explained here. The filter to be calculated here is similar to calculation performed by the filter calculator of the second embodiment

(Calculation of Null Space)

In order to calculate the filter, the base station device 17 performs three processes of: calculating individual filters for the mobile station devices; calculating linear filters; and calculating interference coefficient filters.

Similar to the second embodiment, complex gains of the channels from the respective transmission antennas of the base station devices 17 to the reception antennas of the k-th mobile station device are denoted as a MxMN matrix $H_k$. The entire channel matrix can be expressed by the following.
[Formula 22]

$$\mathbf{H} = [\mathbf{H}_1^t, \mathbf{H}_2^t, \cdots\cdots, \mathbf{H}_N^t]^t \tag{43}$$

Here, a matrix obtained by removing the channels addressed to the k-th MT is defined as the following.
[Formula 23]

$$\hat{\mathbf{H}}_k = [\mathbf{H}_1^t, \mathbf{H}_2^t, \cdots\cdots, \mathbf{H}_{k-1}^t, \mathbf{H}_{k+1}^t, \cdots\cdots, \mathbf{H}_N^t]^t \tag{44}$$

Here, the difference from the fifth embodiment is in that the (k+1)-th to N-th channels are also included in the formula (44). This is because all interferences are cancelled by the linear filter at one time in the sixth embodiment, which differs from the second and fourth embodiments in which only the signals addressed to the mobile station devices allocated to the numbers smaller than the number allocated to the associated mobile station device are cancelled by the linear filter, and the other interference is cancelled by the THP. This matrix $H_{\wedge k}$ is an M(N-1)×MN matrix. Then, a singular value decomposition is performed on the matrix $H_{\wedge k}$.
[Formula 24]

$$\hat{\mathbf{H}}_k = \hat{\mathbf{U}}_k^H \hat{\Sigma}_k [\hat{\mathbf{V}}_k^{Im}, \hat{\mathbf{V}}_k^{ker}]^H \tag{45}$$

Here, the matrix $V_\wedge{}^{Im}_k$ is an MN×M(N-1) matrix. The matrix $V_\wedge{}^{ker}_k$ is an MNxM matrix. The rank of the matrix $H_{\wedge k}$ is M(N-1) at most. Accordingly, the matrix $V_\wedge{}^{ker}_k$ obtained by removing the first M(N-1) columns from the following

matrix

[Formula 25]

$$[\hat{\mathbf{V}}_k^{Im}, \hat{\mathbf{V}}_k^{ker}]$$

corresponds to the null space. Similar to the second embodiment, in the sixth embodiment, the matrix $H_{\wedge k}$ is a matrix indicating channels other than the channels associated with the k-th mobile station device. For this reason, it can be understood that the signal multiplied by the filter $V_{\wedge}{}^{ker}{}_k$ and transmitted by the base station device does not cause interference to the mobile station devices other than the k-th mobile station device.

(Calculation of MT individual filters)

Next, the optimal precoding is performed on each of M signals addressed to each mobile station device. The channel $H_k$ associated with the k-th MT is multiplied by $V_{\wedge}{}^{ker}{}_k$ calculated by the formula (45), and then is subjected to a singular value decomposition again.
[Formula 26]

$$\mathbf{H}_k \hat{\mathbf{V}}_k^{ker} = \mathbf{U}_k{}^H \mathbf{\Sigma}_k \left[\mathbf{V}_k^{Im}, \mathbf{V}_k^{ker}\right]^H \qquad (46)$$

$V_{\wedge}{}^{ker}{}_k$ is an MNxM matrix. For this reason, the rank of $V_{\wedge}{}^{ker}{}_k$ is M at most.

[Formula 27]

$$\left[\mathbf{V}_k^{Im}, \mathbf{V}_k^{ker}\right]$$

The first M columns of the above matrix are set to be the MT individual filters $V^{Im}{}_k$.

(Calculation of linear filters)

Using the matrix $V_{\wedge}{}^{ker}{}_k$ and the matrix $V^{Im}{}_k$ (k=1, 2, ..., N) calculated by the formulas (45) and (46), the linear filters are defined as follows.
[Formula 28]

$$\mathbf{P} = \left[\hat{\mathbf{V}}_1^{ker}\mathbf{V}_1^{Im}, \hat{\mathbf{V}}_2^{ker}\mathbf{V}_2^{Im}, ..., \hat{\mathbf{V}}_N^{ker}\mathbf{V}_N^{Im}\right] \qquad (47)$$

This matrix P corresponds to the matrix Q of the first embodiment. The filter calculator 919 inputs this P to the filter multiplier 1122.

(Calculation of interference coefficient filters)

When a matrix HP is assumed to be an equivalent channel, HP can be defined as follows.
[Formula 29]

$$HP = T = \begin{bmatrix} T_{11} & 0 & \cdots & 0 \\ 0 & T_{22} & \ddots & \vdots \\ \vdots & & \ddots & 0 \\ 0 & \cdots & 0 & T_{NN} \end{bmatrix} \qquad (48)$$

Here, $T_{ii}$ is an M×M matrix and is a channel matrix which the signal addressed to the i-th mobile station device is assumed to pass to reach the i-th MT. As understood from the formula (48), elements other than $T_{ii}$ (i=1, ..., N) are zero. This is because the signal addressed to each mobile station device is multiplied by the filter $V_\wedge{}^{ker}{}_k$ so that the signals addressed to mobile station devices other than that mobile station device do not reach as interferences. The filter multiplier multiplies each candidate signal point x by the filter P as follows:

$$Px = P(s + Z_0 \tau) \qquad (49)$$

The filter multiplier 1122 finally inputs to the norm calculator 923, the signals expressed by this formula (49). Operations of the norm calculator 923 and the optimal signal selector 924 are similar to those of the fifth embodiment. The VP unit 1120 inputs the finally calculated signal to the frame constructor 908 explained in the fifth embodiment.

A configuration of the mobile station device is similar to that of the second embodiment. Similar to the second embodiment, the mobile station device assumes that a reception signal passes on the equivalent channel $T_{kk}$, and performs channel compensation to detect the signal.

In the sixth embodiment, even in a case that one mobile station device performs communication using multiple streams, multiple non-THP-compliant mobile station devices and the THP-compliant mobile station devices can be multiplexed using the MU-MIMO VP.

<Modified Example 1>

The sixth embodiment has been explained with respect to the case of a single carrier. However, the present embodiment may be applied to multicarrier, especially to OFDM for each subcarrier. In this case, the OFDM signal modulator and the OFDM signal demodulator of the modified example 1 of the first embodiment may be newly added for each signal stream. For example, if the N mobile station devices each including M reception antennas are multiplexed, the base station device includes a pair of the OFDM signal modulator and the OFDM signal demodulator for each of the MN signal streams. Additionally, each mobile station device includes M pairs of the OFDM signal modulator and the OFDM signal demodulator.

Here, the relationship between the perturbation vector and the modulo arithmetic is explained. Addition of the perturbation vector to the data signal is an equivalent conversion with respect to the data signal. Since the data signal can be reconstructed by the modulo arithmetic by the mobile station device, even the addition of the perturbation vector does not result in a loss of information of the data signal. The modulo arithmetic corresponds to addition of the perturbation vector to be added so that the signal subjected to the addition is always within a predetermined amplitude range. For example, the modulo arithmetic shown in the formula (10) can be considered to be such that the perturbation vector indicated by Mod,(x)-x is added to the signal x.

All of the embodiments and the modified examples have been explained assuming that the total number of antennas of the base station and the total number of antennas of the mobile stations are respectively equal to the number of data streams to be used for communication. In other words, the explanations have been given assuming that the multiple data streams respectively transmit different data signals. However, for example, two data streams of eight data streams may transmit the same data signals and be received by one mobile station device including two specific antennas, and thereafter the two data signals (the same data signals) are combined, thereby enhancing the reception quality.

The embodiments of the present invention have been explained above with reference to the drawings. However, specific configurations are not limited to the above, and various design modifications may be made without departing from the scope of the present invention.

INDUSTRIAL APPLICABILITY

The present invention can be used in the field of mobile wireless communication or fixed wireless communication.

DESCRIPTION OF REFERENCE NUMERALS

11: first communication device
21: second communication device
102: encoder
103: modulator
104: signal replacing unit
105: interference subtractor
106: modulo arithmetic unit
107: interference calculator
108: linear filter multiplier
109: frame constructor
110: radio transmitter
111: antenna unit
112: DRS generator
113: CRS generator
116: MT-type determining unit
117: order determining unit
118: channel information acquirer
119: filter calculator
120: THP unit
201: decoder
202: demodulator
203: modulo arithmetic unit
204: channel compensator
205: frame demultiplexer
206: radio receiver
207: channel estimator
208: channel state information generator
210: frame constructor
211: radio receiver
212: antenna unit
1211: OFDM signal modulator
217: OFDM signal demodulator
512: modulo switch unit
920: VP unit
921: candidate signal point calculator
922: filter multiplier
923: norm calculator
924: optimal signal selector

**Claims**

1. A communication system comprising:

at least one first communication device configured to spatially multiplex a plurality of data signals and to transmit the plurality of data signals spatially multiplexed from a plurality of antennas; and
a plurality of second communication devices configured to receive the plurality of data signals spatially multiplexed through an antenna,
wherein the first communication device comprises:

a determining unit configured to determine whether each of the plurality of second communication devices is a Tomlinson-Harashima Precoding, THP, -complaint second communication device which can perform a modulo arithmetic method on a received signal or non-THP-compliant second communication device which cannot perform the modulo arithmetic method, based on a received signal from each of the plurality of second communication devices, respectively;

a converting device configured to perform equivalent conversion by applying a modulo arithmetic method or a vector perturbation method only on a data signal addressed to the THP-compliant second communication device; and

a weighting device configured to cancel at least a part of interferences among the plurality of data signals spatially multiplexed by weighting the converted and non-converted signals by a weighting matrix generated based on a channel matrix between the first and second communication devices, wherein the weighting matrix is the Q matrix of a QR decomposition of the channel matrix if the modulo arithmetic method is performed and wherein the weighting matrix is the inverse of the channel matrix if the vector perturbation method is performed.

2. The communication system according to claim 1, wherein the first communication device further comprises at least one interference subtractor device,

the weighting device is configured to cancel a part of the interferences, and

the interference subtractor device is configured to cancel the other part of the interferences.

3. A first communication device including a plurality of transmission and reception antennas and configured to spatially multiplex a plurality of data signals addressed to respective second communication devices and to transmit the plurality of data signals spatially multiplexed from the plurality of antennas, the first communication device comprising:

a determining unit configured to determine whether each of the plurality of second communication devices is a Tomlinson-Harashima Precoding, THP, -compliant second communication device which can perform a modulo arithmetic method on a received signal or non-THP-compliant second communication device which cannot perform the modulo arithmetic method, based on a received signal from each of the plurality of second communication devices, respectively;

a converting device configured to perform equivalent conversion by applying a modulo arithmetic method or a vector perturbation method only on a data signal addressed to the THP-compliant second communication device; and

a weighting device configured to previously cancel at least a part of interferences among the plurality of data signals spatially multiplexed, by weighting the converted and non-converted signals by a weighting matrix generated based on a channel matrix between the first and second communication devices, wherein the weighting matrix is the Q matrix of a QR decomposition of the channel matrix if the modulo arithmetic method is performed and wherein the weighting matrix is the inverse of the channel matrix if the vector perturbation method is performed.

4. A communication method of spatially multiplexing a plurality of data signals, transmitting the plurality of data signals spatially multiplexed from a plurality of antennas included in at least one first communication device, and receiving the plurality of data signals spatially multiplexed through an antenna included in each of a plurality of second communication devices, the communication method comprising steps by the first communication device of:

determining whether each of the plurality of second communication devices is a Tomlinson-Harashima Precoding, THP, -compliant second communication device which can perform a modulo arithmetic method on a received signal or non-THP-compliant second communication device which cannot perform the modulo arithmetic method, based on a received signal from each of the plurality of second communication devices, respectively;

performing equivalent conversion by applying a modulo arithmetic method or a vector perturbation method only on a data signal addressed to the THP-compliant second communication device; and

canceling at least a part of interferences among the plurality of data signals spatially multiplexed by weighting the converted and non-converted signals by a weighting matrix generated based on a channel matrix between the first and second communication devices, wherein the weighting matrix is the Q matrix of a QR decomposition of the channel matrix if the modulo arithmetic method is performed and wherein the weighting matrix is the inverse of the channel matrix if the vector perturbation method is performed.

5. A processor for a first communication device in a communication system including: at least one first communication device configured to spatially multiplex a plurality of data signals and to transmit the plurality of data signals spatially multiplexed from a plurality of antennas; and a plurality of second communication devices configured to receive the plurality of data signals through an antenna, the processor comprising:

a determining unit configured to determine whether each of the plurality of second communication devices is a Tomlinson-Harashima Precoding, THP, -compliant second communication device which can perform a modulo arithmetic method on a received signal or non-THP-compliant second communication device which cannot perform the modulo arithmetic method, based on a received signal form each of the plurality of second communication devices, respectively;

a converting device configured to perform equivalent conversion by applying a modulo arithmetic method or a vector perturbation method only on a data signal addressed to the THP-compliant second communication device; and

a weighting device configured to cancel at least a part of interferences among the plurality of data signals spatially multiplexed, by weighting the converted and non-converted signals by a weighting matrix generated based on a channel matrix between the first and second communication devices, wherein the weighting matrix is the Q matrix of a QR decomposition of the channel matrix if the modulo arithmetic method is performed and wherein the weighting matrix is the inverse of the channel matrix if the vector perturbation method is performed.

**Patentansprüche**

1. Kommunikationssystem, umfassend:

zumindest eine erste Kommunikationsvorrichtung, die dafür konfiguriert ist, eine Vielzahl von Datensignalen räumlich zu multiplexieren und die Vielzahl räumlich multiplexierter Datensignale von einer Vielzahl von Antennen zu übertragen; und
eine Vielzahl zweiter Kommunikationsvorrichtungen, die dafür konfiguriert sind, die Vielzahl räumlich multiplexierter Datensignale über eine Antenne zu empfangen,
wobei die erste Kommunikationsvorrichtung umfasst:

eine Bestimmungseinheit, die dafür konfiguriert ist, jeweils basierend auf einem empfangenen Signal von jeder der Vielzahl zweiter Kommunikationsvorrichtungen zu bestimmen, ob jede der Vielzahl zweiter Kommunikationsvorrichtungen eine Tomlinson-Harashima-Vorcodierung-, THP-, konforme zweite Kommunikationsvorrichtung, die ein Modulo-Arithmetik-Verfahren an einem empfangenen Signal ausführen kann, oder eine nicht THP-konforme zweite Kommunikationsvorrichtung ist, die das Modulo-Arithmetik-Verfahren nicht ausführen kann;
eine Umwandlungsvorrichtung, die dafür konfiguriert ist, eine äquivalente Umwandlung auszuführen, indem ein Modulo-Arithmetik-Verfahren oder ein Vektor-Störungsverfahren nur an einem Datensignal angewendet wird, das an die THP-konforme zweite Kommunikationsvorrichtung adressiert ist; und
eine Gewichtungsvorrichtung, die dafür konfiguriert ist, zumindest einen Teil von Interferenzen zwischen der Vielzahl von räumlich multiplexierten Datensignalen aufzuheben, indem die umgewandelten und nicht umgewandelten Datensignale mittels einer Gewichtungsmatrix gewichtet werden, die basierend auf einer Kanalmatrix zwischen den ersten und zweiten Kommunikationsvorrichtungen erzeugt wurde, wobei die Gewichtungsmatrix die Q-Matrix einer QR-Zerlegung der Kanalmatrix ist, falls das Modulo-Arithmetik-Verfahren ausgeführt wird, und wobei die Gewichtungsmatrix die Inverse der Kanalmatrix ist, falls das Vektor-Störungsverfahren ausgeführt wird.

2. Kommunikationssystem nach Anspruch 1, wobei die erste Kommunikationsvorrichtung ferner zumindest eine Interferenz-Subtrahiervorrichtung umfasst,
die Gewichtungsvorrichtung dafür konfiguriert ist, einen Teil der Interferenzen aufzuheben, und
die Interferenzen-Subtrahiervorrichtung dafür konfiguriert ist, den anderen Teil der Interferenzen aufzuheben.

3. Erste Kommunikationsvorrichtung, die eine Vielzahl von Übertragungs- und Empfangsantennen enthält und dafür konfiguriert ist, eine Vielzahl von Datensignalen, die an jeweilige zweite Kommunikationsvorrichtungen adressiert sind, räumlich zu multiplexieren und die Vielzahl räumlich multiplexierter Datensignale von der Vielzahl von Antennen zu übertragen, wobei die erste Kommunikationsvorrichtung umfasst:

eine Bestimmungseinheit, die dafür konfiguriert ist, jeweils basierend auf einem empfangenen Signal von jeder der Vielzahl zweiter Kommunikationsvorrichtungen zu bestimmen, ob jede der Vielzahl zweiter Kommunikationsvorrichtungen eine Tomlinson-Harashima-Vorcodierung-, THP-, konforme zweite Kommunikationsvorrichtung, die ein Modulo-Arithmetik-Verfahren an einem empfangenen Signal ausführen kann, oder eine nicht THP-konforme zweite Kommunikationsvorrichtung ist, die das Modulo-Arithmetik-Verfahren nicht ausführen kann;
eine Umwandlungsvorrichtung, die dafür konfiguriert ist, eine äquivalente Umwandlung auszuführen, indem ein Modulo-Arithmetik-Verfahren oder ein Vektor-Störungsverfahren nur an einem Datensignal angewendet wird, das an die THP-konforme zweite Kommunikationsvorrichtung adressiert ist; und

eine Gewichtungsvorrichtung, die dafür konfiguriert ist, zumindest einen Teil von Interferenzen zwischen der Vielzahl von räumlich multiplexierten Datensignalen vorher aufzuheben, indem die umgewandelten und nicht umgewandelten Datensignale mittels einer Gewichtungsmatrix gewichtet werden, die basierend auf einer Kanalmatrix zwischen den ersten und zweiten Kommunikationsvorrichtungen erzeugt wurde, wobei die Gewichtungsmatrix die Q-Matrix einer QR-Zerlegung der Kanalmatrix ist, falls das Modulo-Arithmetik-Verfahren ausgeführt wird, und wobei die Gewichtungsmatrix die Inverse der Kanalmatrix ist, falls das Vektor-Störungsverfahren ausgeführt wird.

4. Kommunikationsverfahren zum räumlichen Multiplexieren einer Vielzahl von Datensignalen, Übertragen der Vielzahl räumlich multiplexierter Datensignale von einer Vielzahl von Antennen, die in zumindest einer ersten Kommunikationsvorrichtung enthalten sind, und Empfangen der Vielzahl räumlich multiplexierter Datensignale über eine Antenne, die in jeder einer Vielzahl zweiter Kommunikationsvorrichtungen enthalten ist, wobei das Kommunikationsverfahren die Schritte, durch die erste Kommunikationsvorrichtung, umfasst:

Bestimmen, jeweils basierend auf einem empfangenen Signal von jeder der Vielzahl zweiter Kommunikationsvorrichtungen, ob jede der Vielzahl zweiter Kommunikationsvorrichtungen eine Tomlinson-Harashima-Vorcodierung-, THP-, konforme zweite Kommunikationsvorrichtung, die ein Modulo-Arithmetik-Verfahren an einem empfangenen Signal ausführen kann, oder eine nicht THP-konforme zweite Kommunikationsvorrichtung ist, die das Modulo-Arithmetik-Verfahren nicht ausführen kann;

Ausführen einer äquivalenten Umwandlung, indem ein Modulo-Arithmetik-Verfahren oder ein Vektor-Störungsverfahren nur an einem Datensignal angewendet wird, das an die THP-konforme zweite Kommunikationsvorrichtung adressiert ist; und

Aufheben zumindest eines Teils von Interferenzen zwischen der Vielzahl von räumlich multiplexierten Datensignalen, indem die umgewandelten und nicht umgewandelten Datensignale mittels einer Gewichtungsmatrix gewichtet werden, die basierend auf einer Kanalmatrix zwischen den ersten und zweiten Kommunikationsvorrichtungen erzeugt wurde, wobei die Gewichtungsmatrix die Q-Matrix einer QR-Zerlegung der Kanalmatrix ist, falls das Modulo-Arithmetik-Verfahren ausgeführt wird, und wobei die Gewichtungsmatrix die Inverse der Kanalmatrix ist, falls das Vektor-Störungsverfahren ausgeführt wird.

5. Prozessor für eine erste Kommunikationsvorrichtung in einem Kommunikationssystem, welches enthält: zumindest eine erste Kommunikationsvorrichtung, die dafür konfiguriert ist, eine Vielzahl von Datensignalen räumlich zu multiplexieren und die Vielzahl räumlich multiplexierter Datensignale von einer Vielzahl von Antennen zu übertragen; und eine Vielzahl zweiter Kommunikationsvorrichtungen, die dafür konfiguriert sind, die Vielzahl von Datensignalen über eine Antenne zu empfangen, wobei der Prozessor umfasst:

eine Bestimmungseinheit, die dafür konfiguriert ist, jeweils basierend auf einem empfangenen Signal von jeder der Vielzahl zweiter Kommunikationsvorrichtungen zu bestimmen, ob jede der Vielzahl zweiter Kommunikationsvorrichtungen eine Tomlinson-Harashima-Vorcodierung-, THP-, konforme zweite Kommunikationsvorrichtung, die ein Modulo-Arithmetik-Verfahren an einem empfangenen Signal ausführen kann, oder eine nicht THP-konforme zweite Kommunikationsvorrichtung ist, die das Modulo-Arithmetik-Verfahren nicht ausführen kann;

eine Umwandlungsvorrichtung, die dafür konfiguriert ist, eine äquivalente Umwandlung auszuführen, indem ein Modulo-Arithmetik-Verfahren oder ein Vektor-Störungsverfahren nur an einem Datensignal angewendet wird, das an die THP-konforme zweite Kommunikationsvorrichtung adressiert ist; und

eine Gewichtungsvorrichtung, die dafür konfiguriert ist, zumindest einen Teil von Interferenzen zwischen der Vielzahl von räumlich multiplexierten Datensignalen aufzuheben, indem die umgewandelten und nicht umgewandelten Datensignale mittels einer Gewichtungsmatrix gewichtet werden, die basierend auf einer Kanalmatrix zwischen den ersten und zweiten Kommunikationsvorrichtungen erzeugt wurde, wobei die Gewichtungsmatrix die Q-Matrix einer QR-Zerlegung der Kanalmatrix ist, falls das Modulo-Arithmetik-Verfahren ausgeführt wird, und wobei die Gewichtungsmatrix die Inverse der Kanalmatrix ist, falls das Vektor-Störungsverfahren ausgeführt wird.

**Revendications**

1. Système de communication comprenant :

au moins un premier dispositif de communication configuré pour multiplexer dans l'espace une pluralité de signaux de données et pour transmettre la pluralité de signaux de données multiplexés dans l'espace, à partir d'une pluralité d'antennes ; et

une pluralité de deuxièmes dispositifs de communication configurés pour recevoir la pluralité de signaux de données multiplexés dans l'espace, par l'intermédiaire d'une antenne, dans lequel le premier dispositif de communication comprend :

une unité de détermination configurée pour déterminer si chacun des deuxièmes dispositifs de communication de la pluralité de deuxièmes dispositifs de communication est un deuxième dispositif de communication conforme au précodage Tomlinson-Harashima THP qui peut effectuer un procédé d'arithmétique modulaire sur un signal reçu, ou un deuxième dispositif de communication non conforme au THP qui ne peut pas effectuer le procédé d'arithmétique modulaire, sur la base d'un signal reçu de chacun des deuxièmes dispositifs de communication de la pluralité de deuxièmes dispositifs de communication, respectivement ;

un dispositif de conversion configuré pour effectuer une conversion équivalente en appliquant un procédé d'arithmétique modulaire ou un procédé de perturbation de vecteur seulement sur un signal de données adressé au deuxième dispositif de communication conforme au THP ; et

un dispositif de pondération configuré pour annuler une partie au moins des interférences parmi la pluralité de signaux de données multiplexés dans l'espace, en pondérant les signaux convertis et non convertis, par une matrice de pondération générée sur la base d'une matrice de canal entre les premier et deuxième dispositifs de communication, dans lequel la matrice de pondération est la matrice Q d'une décomposition QR de la matrice de canal si le procédé d'arithmétique modulaire est effectué, et dans lequel la matrice de pondération est l'inverse de la matrice de canal si le procédé de perturbation de vecteur est effectué.

**2.** Système de communication selon la revendication 1, dans lequel le premier dispositif de communication comprend également au moins un dispositif soustracteur d'interférences,
le dispositif de pondération est configuré pour annuler une partie des interférences, et
le soustracteur d'interférences est configuré pour annuler l'autre partie des interférences.

**3.** Premier dispositif de communication contenant une pluralité d'antennes de transmission et de réception, et configuré pour multiplexer dans l'espace une pluralité de signaux de données adressés à des deuxièmes dispositifs de communication respectifs et pour transmettre la pluralité de signaux de données multiplexés dans l'espace, à partir de la pluralité d'antennes, le premier dispositif de communication comprenant :

une unité de détermination configurée pour déterminer si chacun des deuxièmes dispositifs de communication de la pluralité de deuxièmes dispositifs de communication est un deuxième dispositif de communication conforme au précodage Tomlinson-Harashima, THP, qui peut effectuer un procédé d'arithmétique modulaire sur un signal reçu, ou un deuxième dispositif de communication non conforme au THP qui ne peut pas effectuer le procédé d'arithmétique modulaire, sur la base d'un signal reçu de chacun des deuxièmes dispositifs de communication, respectivement ;

un dispositif de conversion configuré pour effectuer une conversion équivalente en appliquant un procédé d'arithmétique modulaire ou un procédé de perturbation de vecteur seulement sur un signal de données adressé au deuxième dispositif de communication conforme au THP ; et

un dispositif de pondération configuré pour annuler au préalable une partie au moins des interférences parmi la pluralité de signaux de données multiplexés dans l'espace, en pondérant les signaux convertis et non convertis, par une matrice de pondération générée sur la base d'une matrice de canal entre les premier et deuxième dispositifs de communication, dans lequel la matrice de pondération est la matrice Q d'une décomposition QR de la matrice de canal si le procédé d'arithmétique modulaire est effectué, et dans lequel la matrice de pondération est l'inverse de la matrice de canal si le procédé de perturbation de vecteur est effectué.

**4.** Procédé de communication pour multiplexer dans l'espace une pluralité de signaux de données, transmettre la pluralité de signaux de données multiplexés dans l'espace, à partir d'une pluralité d'antennes contenues dans au moins un premier dispositif de communication, et recevoir la pluralité de signaux de données multiplexés dans l'espace, par l'intermédiaire d'une antenne contenue dans chacun des deuxièmes dispositifs de communication de ladite pluralité de deuxièmes dispositifs de communication, le procédé de communication comprenant les étapes suivantes, par le premier dispositif de communication :

déterminer si chacun des deuxièmes dispositifs de communication est un deuxième dispositif de communication conforme au précodage Tomlinson-Harashima, THP, qui peut effectuer un procédé d'arithmétique modulaire sur un signal reçu, ou un deuxième dispositif de communication non conforme au THP qui ne peut pas effectuer le procédé d'arithmétique modulaire, sur la base d'un signal reçu de chacun des deuxièmes dispositifs de communication, respectivement ;

effectuer une conversion équivalente en appliquant un procédé d'arithmétique modulaire ou un procédé de perturbation de vecteur seulement sur un signal de données adressé au deuxième dispositif de communication conforme au THP ; et

annuler une partie au moins des interférences parmi la pluralité de signaux de données multiplexés dans l'espace, en pondérant les signaux convertis et non convertis, par une matrice de pondération générée sur la base d'une matrice de canal entre les premier et deuxième dispositifs de communication, dans lequel la matrice de pondération est la matrice Q d'une décomposition QR de la matrice de canal si le procédé d'arithmétique modulaire est effectué, et dans lequel la matrice de pondération est l'inverse de la matrice de canal si le procédé de perturbation de vecteur est effectué.

**5.** Processeur pour un premier dispositif de communication dans un système de communication contenant : au moins un premier dispositif de communication configuré pour multiplexer dans l'espace une pluralité de signaux de données et pour transmettre la pluralité de signaux de données multiplexés dans l'espace, à partir d'une pluralité d'antennes ; et une pluralité de deuxièmes dispositifs de communication configurés pour recevoir la pluralité de signaux de données par l'intermédiaire d'une antenne, le processeur comprenant :

une unité de détermination configurée pour déterminer si chacun des deuxièmes dispositifs de communication est un deuxième dispositif de communication conforme au précodage Tomlinson-Harashima, THP, qui peut effectuer un procédé d'arithmétique modulaire sur un signal reçu, ou un deuxième dispositif de communication non conforme au THP qui ne peut pas effectuer le procédé d'arithmétique modulaire, sur la base d'un signal reçu de chacun des deuxièmes dispositifs de communication, respectivement ;

un dispositif de conversion configuré pour effectuer une conversion équivalente en appliquant un procédé d'arithmétique modulaire ou un procédé de perturbation de vecteur seulement sur un signal de données adressé au deuxième dispositif de communication conforme au THP ; et

un dispositif de pondération configuré pour annuler une partie au moins des interférences parmi la pluralité de signaux de données multiplexés dans l'espace, en pondérant les signaux convertis et non convertis, par une matrice de pondération générée sur la base d'une matrice de canal entre les premier et deuxième dispositifs de communication, dans lequel la matrice de pondération est la matrice Q d'une décomposition QR de la matrice de canal si le procédé d'arithmétique modulaire est effectué, et dans lequel la matrice de pondération est l'inverse de la matrice de canal si le procédé de perturbation de vecteur est effectué.

FIG. 1

# FIG. 2

EP 2 525 518 B1

# FIG. 3

# FIG. 4

FIG. 5

# FIG. 6

START

$j=1$ — S101

SUBSTITUTE IN $\nu_1$ DESIRED SIGNAL $s_1$ ADDRESSED TO 1st MT. — S102

$j=j+1$ — S103

CALCULATE, BY INTERFERENCE CALCULATOR, INTERFERENCE SIGNAL $f_j$ WITH RESPECT TO $j$-th MT USING SIGNALS $\nu_1, \nu_2, \nu_3, \cdots, \nu_{j-1}$ RESPECTIVELY ADDRESSED TO 1st MT, 2nd MT, ..., $(j-1)$-th MT. — S104

SUBTRACT INTERFERENCE SIGNAL $f_j$ FROM DESIRED SIGNAL $s_j$ ADDRESSED TO $j$-th MT. — S105

PERFORM MODULO ARITHMETIC ON SIGNAL $s_j - f_j$ RESULTED FROM SUBTRACTION. — S106

SET SIGNAL SUBJECTED TO MODULO ARITHMETIC TO BE $\nu_j$. — S107

S108
$j=N$ — NO

YES

INPUT SIGNAL $\nu = (\nu_1, \nu_2, \cdots, \nu_N)^t$ TO LINEAR FILTER MULTIPLIER. — S109

END

FIG. 7

EP 2 525 518 B1

# FIG. 8

# FIG. 9

EP 2 525 518 B1

FIG. 10

FIG. 11

FIG. 12

FIG. 13

# FIG. 14

EP 2 525 518 B1

# FIG. 15

EP 2 525 518 B1

# FIG. 16

EP 2 525 518 B1

FIG. 17

EP 2 525 518 B1

FIG. 18

16

26-1

26-2

26-3

26-4

FIG. 19

## FIG. 20

## FIG. 21

## REFERENCES CITED IN THE DESCRIPTION

### Patent documents cited in the description

- JP 2010007042 A
- WO 2009096345 A2
- EP 1782554 A1

### Non-patent literature cited in the description

- **HARASHIMA ; MIYAKAWA.** Matched-Transmission Technique for Channels With Intersymbol Interference. *IEEE Transactions On Communications,* August 1972, vol. Com-20 (4), 774-780
- **J. LIU ; A. KRZYMIEN.** Improved Tomlinson-Harashima Precoding for the Downlink of Multiple Antenna Multi-User Systems. *Proc. IEEE Wireless and Communications and Networking Conference,* March 2005, 466-472
- **B. M. HOCHWALD ; C. B. PEEL ; A. L. SWINDLE-HURST.** A Vector-Perturbation Technique for Near-Capacity Multiantenna Multiuser Communication-Part II: Perturbation. *IEEE Trans. Commun.,* March 2005, vol. 53 (3), 537-544
- **M. JOHAM ; J. BREHMER ; W. UTSCHICK.** MMSE approaches to multiuser spatio-temporal Tomlins-Harashima Precoding. *ITG SCC04,* January 2004, 387-394
- Pilot design for precoding in Multiuser MIMO on IEEE802.16m downlink; C80216m-08_205r2. **TSUGUHIDE AOKI ; SHOHEI KIKUCHI ; HIROKI MORI.** EEE Draft; C80216m-08_205r2. IEEE-SA, 10 March 2008
- **HARDJAWANA W ; VUCETIC B ; YONGHUI LI ; ZHENDONG ZHOU.** Cooperative Multi-User MIMO Wireless Systems Employing Precoding and Beamforming. *PROCEEDINGS OF THE IEEE GLOBAL TELECOMMUNICATIONS CONFERENCE,* 30 November 2009, vol. 2